# EUROPÄISCHE PATENTSCHRIFT

(11) **EP 3 373 085 B1**
(45) Veröffentlichungstag und Bekanntmachung des Hinweises auf die Patenterteilung: **01.11.2023**
(21) Anmeldenummer: 18000245.3
(22) Anmeldetag: 12.03.2018
(51) Int. Cl.: G05B 19/042, F04D 15/00

(54) **SCHALTUNGSANORDNUNG MIT MULTIFUNKTIONALEM EINGANG, INSBESONDERE FÜR DIE STEUER- UND REGELELEKTRONIK EINES PUMPENAGGREGATS**
CIRCUIT ARRANGEMENT WITH MULTI-FUNCTIONAL INPUT, IN PARTICULAR FOR THE CONTROL AND REGULATION ELECTRONICS OF A PUMP UNIT
ENSEMBLE CIRCUIT À ENTRÉE MULTIFONCTION, EN PARTICULIER POUR L'UNITÉ ÉLECTRONIQUE DE COMMANDE ET DE RÉGULATION D'UN GROUPE MOTOPOMPE

(30) Priorität: 11.03.2017 DE 102017002296
(43) Veröffentlichungstag der Anmeldung: 12.09.2018
(73) Patentinhaber: WILO SE, 44263 Dortmund (DE)
(72) Erfinder: Lapp-Emden, Christoph, 44263 Dortmund (DE); Weßling, Thomas, 44229 Dortmund (DE); Syri, Patrick, 44229 Dortmund (DE)
(74) Vertreter: Cohausz Hannig Borkowski Wißgott

(56) Entgegenhaltungen:
- EP-A1- 3 229 085
- EP-A2- 2 101 159
- EP-A2- 2 461 221
- US-A- 5 982 290
- US-A1- 2009 187 306

## Beschreibung

Die vorliegende Erfindung betrifft eine Schaltungsanordnung eines Steuergeräts der technischen Gebäudeausrüstung, insbesondere für die Steuer- und Regelungselektronik eines Pumpenaggregates, zur Verarbeitung eines Ausgangssignals eines Geräts, mit einem multifunktionalen Eingang umfassend zwei Anschlüsse zum Anschließen des Geräts. Insbesondere betrifft die Erfindung einen Eingang zum Anschluss verschiedener Sensoren unterschiedlicher Sensortypen an das Steuergerät. Des Weiteren betrifft die Erfindung ein Verfahren zur Feststellung, welcher Gerätetyp an die Schaltungsanordnung angeschlossen ist.

Auf dem Gebiet der Automobilelektronik offenbart die europäische Patentanmeldung EP 2461221 A2 ein Steuergerät zur Leuchtweitenregelung für Scheinwerfer, welche die Neigung der Fahrzeugkarosserie benötigen. Die Ermittlung des Neigungswinkels des Fahrzeugs wird durch einen Analogsensor oder einen PWM-Sensor ermöglicht, wobei das Steuergerät eine änderbare Beschaltung des Sensoreingangs aufweist und somit eingerichtet ist, die Sensorsignale beider Sensorarten zu verarbeiten.

Steuergeräte der Gebäudeautomation besitzen häufig Steuer- oder Regelungsfunktionen, die auf ein Messsignal eines bestimmten Sensors oder ein externes Steuersignal, z.B. als Sollwert, eines anderen Geräts der Gebäudeautomation, beispielsweise einer übergeordneten Steuerungskomponente, angewiesen sind. Der Sensor oder das andere Gerät ist dann entsprechend mit dem Steuergerät zu verbinden und liefert ein entsprechendes Ausgangssignal, das im Falle des Sensors ein Messsignal, im Falle eines anderen Geräts allgemein ein Steuersignal ist.

Bei den Sensoren kann es sich beispielsweise um einen Druck- oder Differenzdrucksensor, Volumenstromsensor, Temperatursensor, Feuchtigkeitssensor, Helligkeitssensor, Vibrationssensor, Stromsensor, Drehzahlsensor oder einen beliebigen anderen Sensor handeln.

Moderne Kreiselpumpenaggregate für Heizungs-, Kühlungs- oder Trinkwasseranlagen besitzen Steuer- und Regelungselektroniken, die können in einer Vielzahl verschiedener Reglungsarten betrieben werden und benötigen hierfür eine Vielzahl verschiedener Sensoren. Zum Beispiel erfordert eine Differenztemperaturregelung den Anschluss von zwei Temperatursensoren, sofern nicht bereits ein Temperatursensor in der Pumpe integriert ist. Andere Regelungsarten wie eine Differenzdruckregelung oder eine Volumenstromregelung benötigen andere Eingangssignale, um einen Sollwert von einer externen Gebäudeleittechnik zu erhalten.

Um die Vielzahl der unterschiedlichen Sensortypen bei dem Entwurf von Steuergeräten mit entsprechenden Eingängen, insbesondere Steuereingängen, berücksichtigen und gewährleisten zu können, dass die verschiedenen Sensortypen an einem bestimmten Steuergerät auch tatsächlich verwendbar, d.h. kompatibel sind, gibt es Normen wie die DIN IEC 60381-1 oder DIN IEC 60381-2, die den Wertebereich analoger elektrischer Ausgangssignale von Sensoren und sonstigen Steuergeräten definieren. Allgemein bekannt sind hierbei Sensortypen, die ein analoges Spannungssignal, beispielsweise im Bereich 0V... 10V, oder ein analoges Stromsignal, beispielsweise im Bereich 4mA...20mA ausgeben. Diese Signalarten werden auch als Stromeinheitssignal bzw. Spannungseinheitssignal bezeichnet.

Die Gerätetypen, die ein Stromeinheitssignal oder Spannungseinheitssignal ausgeben, sind aktive Geräte bzw. Sensoren, d.h. sie müssen nicht mit einem Strom oder einer Spannung vom Steuergerät versorgt werden. Daneben gibt es passive Sensoren, bei denen eine entsprechende Versorgungsspannung oder ein Versorgungsstrom erforderlich ist. Dies ist beispielsweise bei sogenannten Widerstandsthermometern (Thermistoren) der Fall, deren Widerstand sich in Abhängigkeit der Umgebungstemperatur ändert. Beispiele sind ein NTC, PTC oder ein Platin-Temperatursensor (PT1000). Die zu bestimmende Temperatur wird hierbei über eine Widerstandsmessung anhand der Kennlinie des entsprechenden Widerstandsthermometers ermittelt.

Die Steuer- und Regelungselektroniken von Kreiselpumpenaggregaten für Heizungs-, Kühlungs- oder Trinkwasseranlagen besitzen in der Regel analoge 0V... 10V oder 4mA...20mA-Eingänge. Falls hier ein Temperatursensor angeschlossen werden muss, erfordert dies die Verwendung eines zusätzlichen Konverters, der das Temperaturmesssignal z.B. in einen 4-20mA Wert wandelt.

Die vorgenannten Gerätetypen stellen ein analoges Messsignal bereit. Daneben gibt es Geräte, die ein digitales Messsignal liefern. Als Beispiel seien hier Geräte genannt, deren Ausgangssignal ein Rechtecksignal einer bestimmten Frequenz und Amplitude ist, wobei das Tastverhältnis, d.h. das zeitliche Verhältnis von High und Low innerhalb einer Periode, einen Wert zwischen 0% und 100% angibt. Allerdings können der Maximalwert von 100% und der Minimalwert von 0% aus technischen Gründen nicht erreicht werden. Ein anderer digitaler Sensortyp ist ein so genannter 1-wire Sensor, der einen Datenanschluss zur seriellen Versendung und zum seriellen Empfang digitaler Daten aufweist und über diesen auch mit einer Versorgungsspannung versorgt wird.

Um die verschiedenen Sensor- und Gerätetypen an das Steuergerät der Gebäudeautomation anschließen zu können, wird in der Regel für jede Signalart, d.h. Spannungssignal, Stromsignal, Thermistorspannung, PWM, 1-wire Daten, eine eigene Anschlussklemme im Steuergerät benötigt und vorgesehen. Soll mehr als ein Gerät/ Sensor eines bestimmten Typs angeschlossen werden, so müssen entsprechend viele Anschlussklemmen vorhanden sein. Hieraus folgt, dass eine verhältnismäßig große Anzahl von Anschlussklemmen insgesamt benötigt wird, um eine möglichst große Flexibilität hinsichtlich der Anschlussmöglichkeiten von Sensoren/ und externer Steuergeräte zu gewährleisten.

Die Anschlussklemmen benötigen jedoch jeweils entsprechenden Bauraum, so dass die Anschlussbereiche der Steuergeräte vergleichsweise groß ausfallen. Zudem ist durch die Vielzahl an Anschlussmöglichkeiten die Gefahr gegeben, dass Anschlussklemmen verwechselt werden. Dies kann nicht nur zu Fehlfunktionen im Steuergerät führen, es kann auch zu einer Beschädigung oder Zerstörung des angeschlossenen Sensors/ Geräts oder einer mit der entsprechenden Anschlussklemme verbundenen elektronischen Komponente des Steuergeräts.

Es ist daher Aufgabe der vorliegenden Erfindung, eine Schaltungsanordnung für ein Steuergerät der technischen Gebäudeausstattung bereitzustellen, das einen Anschluss von Geräten verschiedener Gerätetypen ermöglicht gleichzeitig aber den Bauraumbedarf für diese Anschließbarkeit auf ein Minimum reduziert, und die Gefahr des Anschließens eines Sensors oder Geräts an eine falsche Anschlussklemme ausschließt. Ferner ist es Aufgabe der Erfindung, ein Verfahren, insbesondere eine Verwendung der erfindungsgemäßen Schaltungsanordnung bereitzustellen, das eine Feststellung ermöglicht, welcher Gerätetyp an die Schaltungsanordnung angeschlossen ist.

Diese Aufgabe wird durch eine Schaltungsanordnung mit den Merkmalen des Anspruchs 1 gelöst. Vorteilhafte Weiterbildungen sind in den Unteransprüchen angegeben und werden nachfolgend erläutert.

Erfindungsgemäß wird eine Schaltungsanordnung für ein Steuergerät der technischen Gebäudeausrüstung, insbesondere für eine Steuer- und Regelungseinheit eines Pumpenaggregats, zur Verarbeitung eines Ausgangssignals eines Geräts, vorgeschlagen, die einen multifunktionalen Eingang umfassend zwei Anschlüsse zum Anschließen des Geräts aufweist und in zumindest zwei verschiedenen Modi betreibbar ist. An den Eingang sind zumindest drei unterschiedliche Gerätetypen mit Ausgangssignalen verschiedener Arten anschließbar, wobei die Schaltungsanordnung eine interne Beschaltung des Eingangs mit zumindest einem steuerbaren Schalter zur Änderung der internen Beschaltung in Abhängigkeit des angeschlossenen Gerätetyps aufweist.

Durch die erfindungsgemäße Schaltungsanordnung ist es nicht mehr erforderlich, für jeden der verschiedenen Gerätetypen einen eigenen Eingang am Steuergerät vorzusehen. Die Anzahl der Eingänge kann auf den einen multifunktionalen Eingang oder gegebenenfalls mehrere dieser Eingänge reduziert werden, so dass der Bauraumbedarf für Anschlussklemmen, die die Eingang zugänglich machen, auf ein Minimum reduziert wird und es ausgeschlossen ist, eine Anschlussklemme zu verwechseln.

Bei den anschließbaren Geräten kann es sich um Sensoren handeln, deren Ausgangssignal ein Messsignal darstellt, oder um ein anderes externes Steuergerät handeln, beispielsweise einer Gebäudeleittechnik, dessen Ausgangssignal ein Steuersignal ist, welches mit seinem Ausgangssignal z.B. einen Sollwert an das Steuergerät sendet.

Der multifunktionale Eingang ist vorzugsweise nur durch die zwei Anschlüsse gebildet, so dass die anzuschließenden Geräte nur über zwei Drähte bzw. Leitungen zu verbinden sind. Ein Anschluss ist dabei geeigneterweise mit Masse verbunden, während über den anderen Anschluss das eigentliche Ausgangssignal übertragen wird. Die interne Beschaltung des multifunktionalen Eingangs, leitet das Ausgangssignal je nach gerätetypabhängiger Konfiguration zu weiteren Komponenten der Schaltungsanordnung, um es zweckgerichtet nutzbar zu machen.

Gemäß einer Ausführungsvariante kann die Schaltungsanordnung in zumindest drei verschiedenen Modi betreibbar sein, in denen an den Eingang zumindest die drei unterschiedlichen Gerätetypen anschließbar sind, wobei die interne Beschaltung mehr als einen steuerbaren Schalter aufweist, um ihre Konfiguration in Abhängigkeit des angeschlossenen Gerätetyps zu ändern.

Vorzugsweise kann einer der Modi, in denen die Schaltungsanordnung betreibbar ist, ein Spannungsmodus sein, in dem an den Eingang ein Gerät mit einem Spannungssignal als Ausgangssignal anschließbar ist, wobei ein Analog-Digital Wandler mit dem Eingang verbunden ist, um das Spannungssignal zu erfassen. Der Analog-Digital Wandler bildet somit einen Teil der erfindungsgemäßen Schaltungsanordnung. Er verarbeitet das am Eingang anliegende Spannungssignal, indem er es Digitalisiert und zur weiteren Verarbeitung in einer digitalen Steuerung oder Regelung verfügbar macht.

Vom Grundsatz her, kann der Analog-Digital Wandler direkt mit dem multifunktionalen Eingang verbunden sein. Sinnvoll ist es jedoch, vor dem Analog-Digital Wandler einen Tiefpassfilter anzuordnen, um Messrauschen zu unterdrücken. Zusätzlich kann die Ausgangsspannung des Tiefpassfilters auf die maximale Eingangsspannung des Analog-Digital Wandlers begrenzt werden, um diesen vor Überspannung zu schützen. Es ist des Weiteren von Vorteil, wenn zwischen Analog-Digital Wandler und Eingang, insbesondere zwischen dem Tiefpassfilter und dem Eingang ein Spannungsteiler angeordnet ist, um das Spannungssignal an den Messbereich des Analog-Digital Wandlers anzupassen. Tiefpassfilter und Spannungsteiler bilden dann ebenfalls Bestandteile der Schaltungsanordnung.

Das Spannungssignal kann ein Spannungseinheitssignal sein, beispielsweise für die Spannungsbereiche von 0V-5V, von 0-10V, von 1 V-5V, von 2V bis 10V oder von - 10V bis + 10V. Das Gerät im Spannungsmodus kann ein Sensor sein, wobei das Ausgangssignal ein Messsignal bildet, oder ein externes Steuergerät sein, wobei das Ausgangssignal ein Steuersignal, insbesondere zur Sollwertvorgabe bildet.

Zusätzlich oder alternativ kann einer der Modi, in denen die Schaltungsanordnung betreibbar ist, ein Strommodus sein, in dem an den Eingang ein Gerät mit einem Stromsignal als Ausgangssignal anschließbar ist, und in dem ein mit einem Schalter zuschaltbarer Lastwiderstand den Eingang zu Masse hin verbindet und ein Analog-Digital Wandler mit dem Eingang verbunden ist, um einen Spannungsabfall am Lastwiderstand zu erfassen. Der Analog-Digital Wandler bildet auch hier einen Teil der erfindungsgemäßen Schaltungsanordnung, ebenso wie der Lastwiderstand und der Schalter.

Über den Schalter, der hier steuerbar ist, kann der Lastwiderstand wahlweise zu-oder weggeschaltet werden, wobei Zuschalten ein Verbinden zu Masse bedeutet, so dass er elektrisch Wirksam wird. Ein Wegschalten macht den Lastwiderstand hingegen wirkungslos. Die Verbindung zu Masse kann direkt oder indirekt über zumindest ein weiteres elektrisches oder elektronisches Bauteil erfolgen. Der Schalter kann ein steuerbarer Halbleiterschalter, beispielsweise ein Transistor, insbesondere ein MOSFET sein.

Das über den Eingang kommende Stromsignal fließt durch den Lastwiderstand zu Masse und erzeugt so über dem Lastwiderstand einen Spannungsabfall. Dieser wird vom Analog-Digital Wandler gemessen. Er verarbeitet somit das am Eingang anliegende Spannungssignal, indem er es Digitalisiert und zur weiteren Verarbeitung in einer digitalen Steuerung oder Regelung verfügbar macht. Geeigneterweise ist der Analog-Digital Wandler hier identisch zu demjenigen, der im Spannungsmodus eingesetzt wird, einschließlich seiner optionalen Beschaltung durch den Tiefpass und den Spannungsteiler.

Gemäß einer Ausführungsvariante, bei der die erfindungsgemäße Schaltungsanordnung alternativ in dem Spannungsmodus und dem Strommodus betreibbar ist, ist es sinnvoll, wenn die beiden Analog-Digital Wandler der beiden Modi durch ein- und demselben Analog-Digital-Wandler gebildet sind. Die Anzahl der Bauteile, der Bauraum und die Komplexität der Schaltungsanordnung wird dadurch reduziert.

Der Lastwiderstand ist sinnvollerweise nur im Strommodus aktiv, da er in einem der anderen Modi zu einer Verfälschung der Auswertung führen würde.

Das Stromsignal kann ein Stromeinheitssignal sein, beispielsweise für die Strombereiche 0-20mA oder 4-20mA. Das Gerät im Strommodus kann ein Sensor sein, wobei das Ausgangssignal ein Messsignal bildet, oder ein externes Steuergerät sein, wobei das Ausgangssignal ein Steuersignal, insbesondere zur Sollwertvorgabe bildet.

Erfindungsgemäß ist einer der Modi, in denen die Schaltungsanordnung betreibbar ist, ein Temperaturmodus, in dem an den Eingang ein Widerstandsthermometer anschließbar ist, und in dem eine mit einem Schalter zuschaltbare Stromquelle zur Speisung des Widerstandsthermometers mit einem Messstrom und Erzeugung eines Spannungssignals als Ausgangssignal mit dem Eingang verbunden ist, und ein Analog-Digital Wandler mit dem Eingang verbunden ist, um die Spannung über dem Widerstandsthermometers zu erfassen. Der Analog-Digital Wandler bildet auch hier einen Teil der erfindungsgemäßen Schaltungsanordnung, ebenso wie die Stromquelle und der Schalter.

Über den Schalter, der hier steuerbar ist, kann die Stromquelle wahlweise an oder aus, oder bezogen auf den multifunktionalen Eingang zu oder weggeschaltet werden, wobei Zuschalten ein Verbinden mit dem Eingang bedeutet und Wegschalten ein Trennen der Verbindung des Eingangs zur Stromquelle. Der Schalter kann ein steuerbarer Halbleiterschalter, beispielsweise ein Transistor sein, insbesondere ein MOSFET.

Der von der Stromquelle kommende Strom fließt über den multifunktionalen Eingang zum Widerstandsthermometer und erzeugt dort einen Spannungsabfall. Dieser wird vom Analog-Digital Wandler gemessen. Er verarbeitet das am Eingang anliegende Spannungssignal, indem er es digitalisiert. Um die Temperatur zu bestimmten ist dann noch der Widerstandswert des Widerstandsthermometers zu ermitteln. Hierzu kann die Schaltungsanordnung entsprechend eingerichtet sein, wobei der gemessene Spannungswert am Eingang durch den von der Stromquelle gelieferten Strom dividiert wird. Der Strom kann gemäß einer Variante als bekannt angenommen sein, insbesondere wenn die Stromquelle als Konstantstromquelle ausgeführt ist.

Geeigneterweise kennt die Schaltungsanordnung die Kennlinie des Widerstandsthermometers, so dass sie aus dieser Kennlinie anhand des Widerstandswerts die Temperatur ermitteln kann. Um diese Berechnungen durchzuführen, kann die Schaltungsanordnung eine Steuereinheit und einen Speicher aufweisen, und ferner programmtechnisch entsprechend eingerichtet sein. Die Steuereinheit kann beispielsweise ein Mikrocontroller, ein FPGA (Field Programmable Gate Array) oder ein ASIC (Application-Specific Integrated Circuit) sein.

Es ist möglich, dass der Analog-Digital Wandler hier identisch zu demjenigen ist, der im Spannungsmodus eingesetzt wird. Hinsichtlich seiner optionalen Beschaltung durch den Tiefpass und den Spannungsteiler gilt dies auch, aber nur insoweit, als dass der Spannungsteiler in diesem Fall abschaltbar sein muss und insbesondere abgeschaltet sein muss, damit sich der Strom der Stromquelle nicht auf den Spannungsteiler und das Widerstandsthermometers aufteilt und somit der Messstrom durch das Widerstandsthermometer ungleich dem Strom der Stromquelle wäre.

Diese Beschaltung ist im Falle einer Ausführungsvariante, bei der die erfindungsgemäße Schaltungsanordnung wahlweise im Temperaturmodus und Spannungs- und/ oder Strommodus betreibbar ist, für den Spannungsteiler des Analog-Digital Wandlers im Spannungs- und/ oder Strommodus erforderlich, um die Messung im Temperaturmodus nicht zu verfälschen, jedenfalls sofern ein Spannungsteiler vorhanden ist. Vorzugsweise ist der Analog-Digital Wandler deshalb mit dem Eingang über einen mit einem Schalter abschaltbaren Spannungsteiler verbunden ist, wobei der Spannungsteiler in dem Modus mit angeschlossenem Widerstandsthermometer abgeschaltet ist. Der Schalter kann als steuerbarer Halbleiterschalter, insbesondere als Transistor, insbesondere ein MOSFET, ausgeführt sein. Beispielsweise trennt der Schalter die Verbindung des Spannungsteilers zu Masse hin auf.

Vorzugsweise handelt es sich bei dem im Temperaturmodus verwendeten Analog-Digital Wandler um einen anderen Analog-Digital Wandler als im Spannungsmodus oder Strommodus. In der Ausführungsvariante, bei der die erfindungsgemäße Schaltungsanordnung wahlweise im Temperaturmodus und zumindest einem der Modi Spannungsmodus und Strommodus betreibbar ist, umfasst die Schaltungsanordnung somit zwei Analog-Digital Wandler. Dies ermöglicht es, weitere Verbesserungen der Beschaltung umzusetzen, um genauere Messwerte zu erreichen.

Dem andere Analog-Digital Wandler ist geeigneterweise einen Tiefpassfilter vorgeschaltet, um Messrauschen zu unterdrücken. Er besitzt jedoch sinnvollerweise keinen Spannungsteiler.

Die Stromquelle ist bevorzugt nur im Temperaturmodus aktiv, da sie in einem der anderen Modi nicht benötigt wird und zudem stören würde.

Das Widerstandsthermometer kann ein PT100, ein PT1000, ein NTC oder PTC sein.

Um die Genauigkeit der Temperaturmessung zu verbessern, kann gemäß einer Weiterbildung der Schaltungsanordnung ein Referenzwiderstand zwischen der Stromquelle und dem Eingang liegen. Dieser ermöglicht eine genaue Bestimmung des Stroms der Stromquelle, da dieser aufgrund Streuung und Temperaturdrift variieren kann. Vorzugsweise wird hier ein hochpräziser Referenzwiderstand, beispielsweise mit einer Toleranz von maximal 0,1% verwendet. Dies ermöglicht es, die Temperatur mit einer Genauigkeit von keiner gleich 0,5K zu bestimmen. Um den Strom mittels des Referenzwiderstands zu bestimmen, kann ein erster Analog-Digital Wandler über den Referenzwiderstand mit dem multifunktionalen Eingang verbunden sein während ein zweiter Analog-Digital Wandler zur Erfassung der Spannung über dem Widerstandsthermometer mit dem Eingang verbunden sein kann. Somit ergibt sich aus der Differenz der vom ersten und zweiten Analog-Digital Wandler gemessenen Spannungen die Spannung über dem Referenzwiderstand. Durch Division der Spannungsdifferenz durch den Wert des Referenzwiderstands kann dann der genaue Strom der Stromquelle berechnet werden. Um diese Berechnungen durchzuführen, kann die Schaltungsanordnung einen Prozessor, insbesondere einen Mikrocontroller, FPGA oder ASIC, und einen Speicher aufweisen und ferner programmtechnisch entsprechend eingerichtet sein.

In der genannten Weiterbildung kann der erste Analog-Digital Wandler dem zuvor beschrieben Analog-Digital Wandler des Spannungsmodus oder Strommodus entsprechen, wohingegen der zweite Analog-Digital Wandler dem zuvor zum Temperaturmodus beschriebenen anderen Analog-Digital Wandler entspricht. Ideal ist es, wenn der zweite Analog-Digital Wandler mit einem Knoten zwischen dem Lastwiderstand und dem Schalter verbunden ist, der den Lastwiderstand zu Masse verbinden kann. Dies hat den Vorteil, dass der zweite Analog-Digital Wandler auch im Strommodus sinnvoll verwendet werden kann, hier nämlich, um einen Spannungsabfall über dem Schalter zu messen, der die vom ersten Analog-Digital Wandler gemessene Spannung über dem Lastwiderstand verfälscht. Zur Verbesserung der Messgenauigkeit im Strommodus ist dann die vom zweiten Analog-Digital Wandler gemessene Spannung von der vom ersten Analog-Digital Wandler gemessenen Spannung zu subtrahieren. Die Schaltungsanordnung kann hierfür entsprechend eingerichtet sein. Die Berechnung kann z.B. in der Steuereinheit, insbesondere dem Prozessor. Die Schaltungsanordnung kann somit für diese Berechnung programmtechnisch entsprechend eingerichtet sein.

Um den Schalter, der den Lastwiderstand zu Masse verbinden kann, vor einer Überspannung und/ oder einer negativen Eingangsspannung zu schützen, kann eine Schutzdiode vor oder hinter dem Schalter angeordnet sein. Vorzugsweise ist dann der Knoten, der zum zweiten Analog-Digital Wandler führt, zwischen der Reihenschaltung aus Schutzdiode und Schalter und dem Lastwiderstand angeordnet. Somit wird erreicht, dass auch der Spannungsabfall über der Schutzdiode vom zweiten Analog-Digital Wandler erfasst und bei der Korrektur des Messwerts des ersten Analog-Digital Wandlers berücksichtigt wird.

Wie bereits ausgeführt, kann die Stromquelle eine Konstantstromquelle sein. Alternativ kann die Stromquelle zur Einstellung der Höhe des Messstroms eine gesteuerte Stromquelle sein. Dies hat den Vorteil, dass unterschiedliche Widerstandsthermometer verwendet werden und die Höhe des Stroms entsprechend an das verwendete Widerstandsthermometer angepasst werden kann. Ferner können durch eine Anpassung der Höhe des Speisestroms Drifteffekte kompensiert werden.

Die Ansteuerung der Stromquelle kann beispielsweise spannungsgesteuert erfolgen. Vorzugsweise kann hierfür ein Digital-Analog Wandler (DAC) verwendet werden, dessen Ausgang mit dem Steuereingang der Stromquelle verbunden ist. Dies hat den Vorteil, dass der Digital-Analog Wandler sogleich mit dem oder den Analog-Digital Wandler(n) in derselben Prozessoreinheit oder Mikrocontrollereinheit ausgebildet sein kann, da diese häufig einen oder mehr Digital-Analog Wandler und einen oder mehr Analog-Digital Wandler gleichzeitig "on Board" haben.

Gemäß einer vorteilhaften Weiterbildung kann die Stromquelle geregelt sein, wobei sie mit einem Rückkopplungseingang über einen Rückkopplungspfad direkt mit dem Eingang verbunden ist. Auf diese Weise kann der Speisestrom der Stromquelle konstant gehalten und Temperatureinflüsse auf die Stromquelle eliminiert werden. In Verbindung mit dem Digital-Analog Wandler wird durch die Rückkopplung an der Stelle erreicht, dass der Wandler den Strom so regelt, dass die Spannung über dem extern angeschlossenen Widerstandsthermometer exakt der Spannung am DAC-Ausgang entspricht. Beispielsweise wird die DAC Ausgangsspannung immer so eingestellt, dass ein Strom von 0,5mA durch den Referenz-Widerstand und das extern angeschlossene Widerstandsthermometer fließt. Ein konstanter Strom durch das Widerstandsthermometer sichert einen konstanten Spannungsabfall über den Leitungs- und Anschlusswiderständen und macht sich als konstantes Offset über dem gesamten Temperaturmessbereich des Widerstandsthermometers bemerkbar. Dieser konstante Offset kann dann in der Softwareapplikation vom Messwert abgezogen werden.

Zusätzlich oder alternativ zu dem zuvor beschriebenen Spannungsmodus, Strommodus und Temperaturmodus, kann einer der Modi, in denen die Schaltungsanordnung betreibbar ist, ein PWM-Modus sein, in dem an den Eingang ein Gerät mit einem ein Tastverhältnis angebendes digitales Spannungssignal konstanter Frequenz als Ausgangssignal anschließbar ist. Gemäß einer Variante kann ein Analog-Digital Wandler über einen Tiefpassfilter mit dem Eingang verbunden sein.

Das PWM-Signal ist ein Rechtecksignal, das über das Tastverhältnis, d.h. das Verhältnis der zeitlichen Dauer von High und Low innerhalb einer Periode die Sollwertinformation überträgt. Das digitale Spannungssignal (PWM-Signal) wird somit auf den Tiefpassfilter gegeben, welcher daraus eine zum Tastverhältnis proportionale Gleichspannung an seinem Ausgang liefert, die vom Analog-Digital Wandler gemessen wird. Das PWM-Signal wird somit zunächst in ein analoges Signal gewandelt und anschließend wieder digitalisiert. Die mit dem PWM-Signal transportierte Information, insbesondere ein Sollwert, bleibt somit erhalten und kann im PWM-Modus der Schaltungsanordnung verarbeitet werden.

Der Analog-Digital Wandler kann hier dem Analog-Digital Wandler entsprechen, wie er zum Spannungsmodus oder Strommodus zuvor beschrieben wurde. In der Kombination des PWM-Modus mit dem Spannungsmodus oder Strommodus, in denen die Schaltungsanordnung wahlweise betrieben werden kann, kann der im PWM-Modus benötigte Analog-Digital Wandler durch den Analog-Digital Wandler aus dem Spannungsmodus gebildet sein. In der Kombination des PWM-Modus mit dem Temperaturmodus, in dem die Schaltungsanordnung wahlweise betrieben werden kann, kann der im PWM-Modus benötigte Analog-Digital Wandler durch den ersten Analog-Digital Wandler aus dem Temperaturmodus gebildet sein.

Gemäß einer anderen Variante erfolgt die Verarbeitung des PWM-Signals nicht über einen Analog-Digital Wandler, sondern einen zuschaltbaren Digitaleingang. Dieser kann, wenn er sehr hochohmig ist und somit die Genauigkeit der Analogmessung nicht beeinträchtigt, direkt mit dem Eingang verbunden sein. Da die Hochohmigkeit aber gegebenenfalls nicht vorliegt, kann der Digitaleingang über einen Schalter mit dem Eingang verbindbar sein, wobei er zur Verarbeitung des PWM-Signals gemäß dieser anderen Variante auch verbunden ist. Durch die direkte oder über den Schalter erfolgte Verbindung wird das PWM-Signal auf den Digitaleingang gegeben. Der Digitaleingang kann ein Eingang eines Zählers sein. Der Digitaleingang ist in dieser Ausführungsvariante Teil der Schaltungsanordnung. Er bildet beispielsweise einen Eingang einer Steuereinheit, beispielsweise eines Mikroprozessors oder Mikrocontrollers, in der auch der oder die Analog-Digital Wandler ausgebildet sind.

Der Schalter kann ein steuerbarer Halbleiterschalter, beispielsweise ein Transistor, insbesondere ein MOSFET sein. Ein MOSFET hat den Vorteil, dass er leistungslos gesteuert wird und dadurch wenigster Verluste besitzt. Sinnvollerweise verbindet der Schalter den Digitaleingang über den Spannungsteiler mit dem multifunktionalen Eingang, so dass der Spannungsteiler das PWM-Signal an den Wertebereich des Digitaleingangs anpasst.

Zusätzlich oder alternativ zu dem zuvor beschriebenen Spannungsmodus, Strommodus, Temperaturmodus und PWM-Modus, kann einer der Modi, in denen die Schaltungsanordnung betreibbar ist, ein Datenmodus sein, in dem an den Eingang ein über eine gemeinsame Daten- und Versorgungsleitung speisbarer digitaler Sensor mit einem digitalen Ausgangssignal anschließbar ist. Zusätzlich ist eine mit einem Schalter zuschaltbare Betriebsspannung für den digitalen Sensor über einen überbrückbaren Pull-up Widerstand mit dem Eingang verbunden. Ebenfalls mit dem Eingang verbunden, ist ein mit einem Schalter zuschaltbarer Digitaleingang.

In dem Datenmodus ist es möglich, über den multifunktionalen Eingang auch die Daten eines 1-wire Sensors zu verarbeiten, der über ein- und dieselbe Leitung gespeist wird und Daten überträgt bzw. empfangen kann. Die Daten werden dem Digitaleingang zugeleitet und können dort direkt verarbeitet werden. Bei dem Digitaleingang kann es sich um denselben Eingang oder einen anderen Eingang als im PWM-Modus handeln. Sofern es sich um denselben Digitaleingang handelt, ist auch der Schalter zum Verbinden des Digitaleingangs mit dem multifunktionalen Eingang derselbe wie im PWM-Modus.

Der Pull-up Widerstand ist notwendig, um ein Low-Signal erzeugen zu können. Digitale Sensoren arbeiten häufig mit Active-Low Signalen, d.h. übertragen eine logische 1 als Low Signal über die Busleitung. Werden keine Datenübertragen, zieht der Pull-up Widerstand die Busleitung automatisch auf High. Der Pull-up Widerstand ist überbrückbar, um eine Initialisierung des Sensors auszulösen. Die Überbrückung kann mittels eines Schalters erfolgen, der den Eingang direkt mit der Versorgungsspannung verbindet. Sowohl dieser Schalter als auch der Schalter zum Pull-up Widerstand und der Schalter zum Digitaleingang können als steuerbare Halbleiterschalter ausgebildet sein, beispielsweise als Transistoren, insbesondere als MOSFETs. Sowohl diese Schalter als auch der Pull-up Widerstand und der Digitaleingang bilden einen Teil der Schaltungsanordnung.

Um Daten zum 1-wire Sensors übertragen zu können, muss die Möglichkeit gegeben sein, den multifunktionalen Eingang bzw. den Anschluss, mit dem die Datenleitung des Sensors verbunden ist, auf Masse zu ziehen. Dies kann beispielsweise durch einen zu schaltbaren Widerstand erfolgen, der den Eingang zu Masse verbindet. Da im Strommodus bereits der Lastwiderstand diesem Zweck dient, ist eine kombinierte Beschaltung der Schaltungsanordnung für einen wahlweisen Betrieb im Strommodus und Datenmodus vorteilhaft, da durch geeignet gepulstes Schalten des Lastwiderstands eine bestimmte Pulsfolge an den Sensor übertragbar ist, um mit diesem zu kommunizieren.

Mit den verschiedenen beschriebenen Konfigurationen der Schaltungsanordnung, bzw. Beschaltung des multifunktionalen Eingangs sind fünf verschiedene Modi realisierbar, nämlich der Spannungsmodus, der Strommodus, der Temperaturmodus, der PWM-Modus und der Datenmodus. Erfindungsgemäß ist die Schaltungsanordnung eingerichtet, in zumindest drei dieser Modi betrieben zu werden. Eine Kombination von wahlweise einschaltbaren Modi bedeutet hier, dass die Schaltungsanordnung alle Komponenten umfasst, die in Bezug auf den jeweiligen Modus beschrieben sind.

Von besonderem Vorteil ist es, wenn die Schaltungsanordnung konfigurierbar ist, wahlweise in einem der fünf Modi betrieben zu werden. Um dies zu ermöglichen, kann sie alle Komponenten umfassen, die in Bezug auf den Spannungsmodus, den Strommodus, den Temperaturmodus, den PWM-Modus und den Datenmodus vorstehend beschrieben sind.

Um die Schaltungsanordnung für den jeweiligen Modus zu konfigurieren, kann eine Steuereinheit verwendet werden, die selbst einen Teil der erfindungsgemäßen Schaltungsanordnung bildet. Die Steuereinheit kann Steuersignale ausgeben, um den oder die Schalter in Abhängigkeit des Modus ein- oder auszuschalten. Hierzu sind die Steuereingänge der Schalter mit der Steuereinheit über entsprechende Steuerleitungen verbunden. Die Steuereinheit kann beispielsweise durch einen Prozessor, beispielsweise einen Mikroprozessor oder Mikrocontroller, einen FPGA oder ASIC gebildet sein.

Vorzugsweise umfasst diese Steuereinheit auch den Analog-Digital Wandler bzw. den ersten und zweiten Analog-Digital Wandler und/ oder den Digital-Analog Wandler.

Die Konfiguration kann beispielsweise von einer Bedienperson des Steuergeräts manuell ausgelöst werden, indem sie am Steuergerät den Modus auswählt, d.h. dem Steuergerät quasi mitteilt, welcher Gerätetyp an den Eingang angeschlossen ist oder werden soll.

Besonders bevorzugt, ist die Schaltungsanordnung aber eingerichtet, selbständig zu erkennen, welcher Gerätetyp an den Eingang angeschlossen ist. Dies kann beispielsweise anhand der am Eingang anliegenden Spannung und/ oder der Frequenz des Ausgangssignals und/ oder anhand der Eingangsimpedanz des angeschlossenen Geräts bestimmt werden. Entsprechend kann die Schaltungsanordnung eingerichtet sein, den Gerätetyp anhand der Eingangsspannung, der Frequenz oder des Eingangswiderstands des Gerätes zu ermitteln.

Gemäß einer Ausführungsvariante kann die Schaltungsanordnung eingerichtet sein, den Modus selbständig durch aufeinanderfolgendes Schalten der Schalter zum Zu-und/ oder Abschalten der Komponenten der internen Beschaltung zu erkennen. Das Zu- und/ oder Abschalten kann programmgesteuert von der Steuereinheit durchgeführt werden, wobei ein entsprechendes Programm auf die Steuereinheit geladen sein kann und darin ablaufen kann.

Das Verfahren zur automatischen Bestimmung des Typs eines an den multifunktionalen Eingang einer erfindungsgemäßen Schaltungsanordnung angeschlossenen Geräts kann dadurch gekennzeichnet sein, dass die Spannung, die Frequenz und/ oder die Impedanz am Eingang ermittelt und in Abhängigkeit der ermittelten Spannung, Frequenz und/ oder Impedanz auf den Gerätetyp geschlossen wird. Die Spannung kann beispielsweise von einem Analog-Digital Wandler gemessen werden. Für die Frequenz kann beispielsweise ein digitaler Zähler verwendet werden.

Je weniger Geräte für einen Anschluss vorgesehen, bzw. je weniger Ausgangssignale vom Hersteller zugelassen werden, desto weniger Fallunterscheidungen sind hier bei der Auswertung der gemessenen Spannung erforderlich. So kann beispielsweise zwischen einem Gerät mit einem Spannungssignal, einem Gerät mit einem Stromsignal und einem Widerstandsthermometer durch einen einzigen Schritt unterschieden werden.

Entsprechend komplexer wird es, je mehr verschiedene Gerätetypen an den multifunktionalen Eingang anschließbar sind. Soll zwischen einem Gerät mit einem Spannungssignal und einem Gerät mit PWM-Signal unterschieden werden, ist eine weitere Abfrage erforderlich. Gleiches gilt für den Fall, dass zwischen einem Widerstandsthermometer und einem 1-wire Sensor unterschieden werden soll. Das Verfahren kann zudem zusätzliche Schritte umfassen, um Fehlermeldungen auszugeben, wenn beispielsweise kein Sensor angeschlossen ist oder ein falscher Sensor angeschlossen ist.

Vorzugsweise kann vorgesehen sein, dass die Schaltungsanordnung nach der Erkennung des Gerätetyps sogleich die interne Beschaltung des Eingangs auf den Modus mit dem erkannten Gerätetyp konfiguriert. Gegebenenfalls kann hier auch gleich der letzte Schaltzustand aller Schalter beibehalten werden, der zu der Erkennung des Gerätetyps geführt hat.

Gemäß einem Aspekt des Verfahrens ist vorgesehen, dass ein Gerät mit einem Stromsignal als Ausgangssignal am Eingang angenommen wird, wenn die Spannung am Eingang größer als ein oberer Grenzwert ist. Als oberer Grenzwert kann beispielsweise der maximal zu erwartende Wert des Spannungssignals, beispielsweise 10V, verwendet werden. Es kann eine Überprüfung dieser Annahme erfolgen, indem ein Lastwiderstand am Eingang zu Masse verbunden wird, wobei auf das Gerät mit dem Stromsignal geschlossen wird, wenn die Spannung am Eingang innerhalb eines bestimmten Wertebereichs liegt, oder auf einen Fehler geschlossen wird, wenn dies nicht der Fall ist. Der Wertebereich kann beispielsweise zwischen 1,2V und 6V liegen.

Gemäß einem anderen Aspekt des Verfahrens ist vorgesehen, dass ein Gerät mit einem Spannungssignal als Ausgangssignal oder ein PWM-Gerät mit einem ein Tastverhältnis angebenden digitalen Spannungssignal konstanter Frequenz als Ausgangssignal am Eingang angenommen wird, wenn die Spannung am Eingang zwischen null und einem oberen Grenzwert liegt. Als oberer Grenzwert kann beispielsweise der maximal zu erwartende Wert des Spannungssignals, beispielsweise 10V, verwendet werden.

Um dann weiter differenzieren zu können, ob der Gerätetyp ein Gerät mit einem Spannungssignal oder ein PWM-Gerät ist, kann der Eingang anschließend mit einem Digitaleingang verbunden, die Frequenz des Ausgangssignals ermittelt und mit einer Grenzfrequenz verglichen werden. Auf das Gerät mit dem Spannungssignal als Ausgangssignal kann dann geschlossen werden, wenn die ermittelte Frequenz unterhalb der Grenzfrequenz liegt. Alternativ kann auf das PWM-Gerät geschlossen werden, wenn die ermittelte Frequenz oberhalb der Grenzfrequenz liegt.

Erfindungsgemäß ist vorgesehen, dass ein Widerstandsthermometer oder ein 1-wire Sensor am Eingang angenommen wird, wenn keine Spannung am Eingang vorliegt. Um dann weiter differenzieren zu können, ob das Gerät ein Widerstandsthermometer oder ein 1-wire Sensor ist, kann der Eingang anschließend über einen Pull-up Widerstand mit einer Versorgungsspannung beaufschlagt werden. Die Versorgungsspannung beträgt beispielsweise 5V. Es kann dann auf das Widerstandsthermometer geschlossen werden, wenn die Spannung am Eingang in einem Werteberich unterhalb der Versorgungsspannung liegt, beispielsweise zwischen 0,5V und 1,5V. Es kann alternativ auf den 1-wire Sensor geschlossen werden, wenn die Spannung am Eingang gleich der Versorgungsspannung. Alternativ kann auf einen Fehler geschlossen werden, wenn die Spannung am Eingang außerhalb des Wertebereichs liegt und nicht gleich der Versorgungsspannung ist.

Zusätzlich kann eine Überprüfung der Annahme eines 1-wire Sensors erfolgen, indem der Eingang mit einem Digitaleingang verbunden, eine bestimmte Spannungspulsfolge am Eingang als Anfrage erzeugt und auf eine bestimmte Spannungspulsfolge als Antwort des 1-wire Sensors gewartet wird, wobei auf den 1-wire Sensor geschlossen werden kann, wenn die bestimmte Spannungspulsfolge als Antwort empfangen wird. Alternativ kann auf einen Fehler geschlossen werden, wenn dies nicht der Fall ist, d.h. keine Antwort erhalten wird.

Die die Anfrage bildende Spannungspulsfolge am Eingang kann durch gepulstes Verbinden des Eingangs mit Masse, insbesondere des Lastwiderstands mit Masse, erzeugt werden.

Mit dem vorgestellten Verfahren können alle fünf Gerätetypen an dem multifunktionalen Eingang automatisch und zuverlässig erkannt werden. Die bei diesem Verfahren genannten Komponenten können den namensgleichen Komponenten entsprechen, die in Bezug zu den einzelnen Modi beschrieben sind. Die erfindungsgemäße Schaltungsanordnung ist bevorzugt eingerichtet, das Verfahren durchzuführen. Die Aktivierung des Verfahrens kann manuell erfolgen, indem eine Bedienperson eine entsprechende Funktion auf dem Steuergerät auslöst. Sie kann aber auch automatisch aktiviert werden, beispielsweise beim Hochfahren (Booten) des Steuergeräts, oder wenn eine Bedienperson eine bestimmte Regelungsfunktion in dem Steuergerät einstellt, die einen entsprechenden Sensor oder einen Sollwert an dem multifunktionalen Eingang benötigt.

Ein weiterer Aspekt der Erfindung betrifft eine Pumpenelektronik für ein Pumpenaggregat mit einer erfindungsgemäßen Schaltungsanordnung. Die Pumpenelektronik entspricht hier dem beschriebenen Steuergerät.
Ein weiterer Aspekt der Erfindung betrifft ein Pumpenaggregat, insbesondere Kreiselpumpenaggregat, mit einer Pumpenelektronik, die eine erfindungsgemäßen Schaltungsanordnung aufweist.

Weitere Merkmale, Wirkungen und Vorteile der Erfindung werden nachfolgend anhand von Ausführungsbeispielen unter Verwendung der beigefügten Figuren erläutert. Es zeigen:
Fig. 1: eine erste Variante einer erfindungsgemäßen Schaltungsanordnung
Fig. 2: eine zweite Variante einer erfindungsgemäßen Schaltungsanordnung
Fig. 3: eine dritte Variante einer erfindungsgemäßen Schaltungsanordnung
Fig. 4: eine vierte Variante einer erfindungsgemäßen Schaltungsanordnung
Fig. 5: Tabelle mit Schaltzuständen der Steuersignale

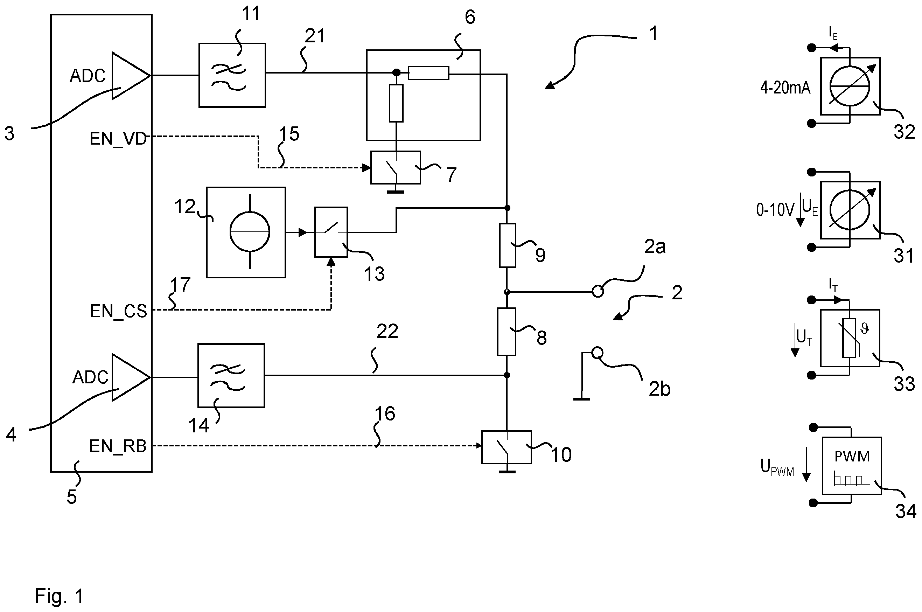

Fig. 1 zeigt eine erste Ausführungsvariante einer erfindungsgemäßen Schaltungsanordnung 1 für ein Steuergerät der technischen Gebäudeausrüstung, insbesondere für eine Steuer- und Regelungselektronik eines Pumpenaggregats. Die Schaltungsanordnung 1 besitzt einen multifunktionalen Eingang 2, an den verschiedene Geräte 31, 32, 33, 34, hier Sensoren, mit unterschiedlichen Ausgangssignalen I_{E}, U_{E}, U_{T}, U_{PWM} angeschlossen werden können. Die Ausgangssignale können hier als Mess- oder Steuersignale betrachtet werden. Der Eingang 2 besteht aus zwei Anschlüssen 2a, 2b, von denen ein zweiter Anschluss 2b mit Masse verbunden ist. Der erste Anschluss 2a führt das eigentliche Ausgangssignal und ist intern beschaltet, um das Ausgangssignal zu verarbeiten.

Die Schaltungsanordnung 1 umfasst einen ersten Analog-Digital Wandler (ADC) 3, einen ersten Tiefpassfilter 11 und einen Spannungsteiler 6, wobei der erste ADC 3 über den Tiefpassfilter 11 und den Spannungsteiler 6 mit dem Eingang 2 bzw. dem ersten Anschluss 2a verbunden ist. Diese Komponenten bilden einen Primärmesspfad 21. Der Spannungsteiler 6 ist schaltbar, wobei er mittels eines ersten Schalters 7 zu Masse verbindbar ist, um gemäß seinem bestimmungsgemäßen Zweck zu wirken. Ist der erste Schalter 7 geschlossen, so wirkt der Spannungsteiler 6 bestimmungsgemäß. Ist er offen, hat der Spannungsteiler 6 keine Wirkung. Angesteuert wird der erste Schalter 7 über eine Steuerleitung 15 von einer Steuereinheit 5 mittels Steuersignal EN_VD. Der erste ADC 3 ist Teil der Steuereinheit 5.

Die Schaltungsanordnung 1 umfasst des Weiteren einen schaltbaren Lastwiderstand 8, typischerweise mit weniger als 300Ω, der mit einem seiner Anschlüsse mit dem ersten Anschluss des Eingangs 2 verbunden ist. Mit einem anderen Anschluss ist der Lastwiderstand 8 zu Masse verbindbar. Dies erfolgt mit Hilfe eines zweiten Schalters 10. Ist der zweite Schalter 10 geschlossen, so wirkt der Lastwiderstand 8. Ist er offen, hat der Lastwiderstand8 keine Wirkung. Angesteuert wird der zweite Schalter 10 über eine Steuerleitung 16 von der Steuereinheit 5 mittels Steuersignal EN_RB.

Mit dem Knoten zwischen dem Lastwiderstand 8 und dem Schalter ist ein zweite Analog-Digital Wandler (ADC) 4 verbunden. Auch diesem ADC 4 ist ein Tiefpassfilter 14 vorgeschaltet. Der zweite ADC 4 ist ebenfalls Teil der Steuereinheit 5. Der Pfad vom Eingang 2 zum zweiten ADC 4 stellt einen Sekundärmesspfad 22 dar.

Die Schaltungsanordnung 1 umfasst schließlich noch eine Konstantstromquelle 12, einen dritten Schalter 13 und einen Referenzwiderstand 9, wobei die Stromquelle 12 über den Referenzwiderstand 9 mit dem Eingang 2, insbesondere mit seinem ersten Anschluss 2a verbunden ist. Der dritte Schalter 13 liegt hier in Reihe mit der Stromquelle 12 und dem Referenzwiderstand 9 und ist zwischen diese beiden geschaltet. Im geschlossenen Zustand verbindet der dritte Schalter 13 die Stromquelle 12 mit dem Referenzwiderstand 9, im geöffneten Zustand ist die Stromquelle 12 vom Eingang 2 getrennt. Alternativ kann der dritte Schalter 13 auch Bestandteil der Stromquelle 12 sein und diese ein- und ausschalten. Angesteuert wird der dritte Schalter 13 über eine Steuerleitung 17 von der Steuereinheit 5 mittels Steuersignal EN_CS. Der Referenzwiderstand 9 ist so angeordnet, dass er auch in Reihe mit dem Spannungsteiler liegt, d.h. Teil des Primärmesspfads 21 ist.

An den multifunktionalen Eingang 2 können in der Ausführungsvariante gemäß Fig. 1 wahlweise vier verschiedene Geräte 31, 32, 33, 34 angeschlossen werden, die in Fig. 1 rechts dargestellt sind. Ein erstes Gerät ist ein Sensor 31, der ein Spannungssignal U_{E} mit Werten zwischen 0... 10V liefert. Ein zweites Gerät ist ein Sensor 32, der ein Stromsignal I_{E} mit Werten zwischen 4...20mA liefert. Ein drittes Gerät ist ein Temperatursensor 33, insbesondere ein PT1000, der mit einem Strom I_{T} beaufschlagt werden muss und daraufhin eine Messspannung U_{T} liefert. Ein viertes Gerät ist ein PWM-Sensor 34, der ein digitales Spannungssignal U_{PWM} bereitstellt, welches ein Rechtecksignal konstanter Frequenz ist, wobei das Tastverhältnis, d.h. das Verhältnis der zeitlichen Dauer von High und Low innerhalb einer Periode, einen Wert zwischen 0% und 100% abbildet.

Damit die vier verschiedenen Geräte 31, 32, 33 34 wahlweise funktionsfähig an dem Eingang 2 betrieben werden können, muss die interne Beschaltung des Eingang 2 mit Hilfe der Schalter 7, 10, 13 für die Verarbeitung des entsprechenden Ausgangssignals U_{E}, I_{E}, U_{T}, U_{PWM}, d.h. in Abhängigkeit des angeschlossenen Gerätetyps jeweils konfiguriert werden. Die Summe der Schalterzustände bildet damit eine Konfiguration. Insgesamt kann der multifunktionale Eingang 2 nun also für folgende Signaltypen konfiguriert werden:
- Spannungseingang 0 ... 10V
- Stromeingang 0 ... 20mA
- Temperatureingang für PT1000 Sensoren
- PWM

Durch die jeweilige Konfiguration kann die Schaltungsanordnung dann in einem jeweiligen Modus, insbesondere ein Messmodus, betrieben werden, von denen es hier insgesamt vier gibt. Der Modus wird von der Steuereinheit 5 eingestellt.

Einer der Modi ist ein Spannungsmodus, in dem an den Eingang 2 das Gerät 31 mit dem Spannungssignal U_{E} anschließbar ist. Im Spannungsmodus wird der erste ADC 3 mit aktivem Spannungsteiler 6 verwendet, um die am Eingang 2 anliegende Spannung zu bestimmen. Der zweite und dritte Schalter 10, 13 sind ausgeschaltet. Die Spannung wird dann nach dem Spannungsteiler 6 vom Tiefpass 11 gefiltert und am ersten ADC 3 in der Steuereinheit 5 digitalisiert.

Einer der Modi ist ein Strommodus, in dem an den Eingang 2 das Gerät 32 mit dem Stromsignal I_{E} als Ausgangssignal anschließbar ist. Im Strommodus verbindet der zweite Schalter 10 den Lastwiderstand 8 den Eingang 2 zu Masse hin. Über den Lastwiderstand wird der am Eingang anliegende Strom in eine Spannung umgewandelt. Der erste ADC 3 ist bei aktivem Spannungsteiler 6 mit dem Eingang 2 verbunden, um einen Spannungsabfall am Lastwiderstand 8 zu erfassen. Die Spannung am Eingang 2 wird dann nach dem Spannungsteiler 6 vom Tiefpass 11 gefiltert und am ersten ADC 3 in der Steuereinheit 5 digitalisiert. Ein Spannungsabfall über dem zweiten Schalter 10 wird im Sekundärmesspfad 22 mittels zweitem ADC 4 über den zweiten Tiefpass 14 von der Steuereinheit 5 ermittelt. Der Spannungsabfall ist vom Messwert des ersten ADC 3 zu subtrahieren.

Einer der Modi ist des Weiteren ein Temperaturmodus, in dem an den Eingang 2 der Temperatursensor 33 (PT1000) anschließbar ist. Die Beschaltung ist in diesem Modus so konfiguriert, dass der dritte Schalter 13 die Stromquelle 12 zur Speisung des Temperatursensors 33 mit einem Messstrom über den Referenzwiderstand mit dem Eingang 2 verbindet. Der erste Schalter 7 ist geöffnet, so dass der Spannungsteiler 6 ohne Funktion ist. Der zweite Schalter 10 ist ebenfalls geöffnet, so dass der Lastwiderstand keine Funktion hat.

Mit Hilfe der Stromquelle 12 wird ein Strom durch den Referenzwiderstand 9 und den extern angeschlossenen Temperatursensor 33 eingeprägt Am Eingang 2 stellt sich in Abhängigkeit der Temperatur und damit des Widerstands des Temperatursensor 33 eine entsprechende Spannung U_{T} ein. Diese wird vom zweiten ADC 4 in der Steuereinheit 5 gemessen. Um den Widerstand des Temperatursensors 33 zu bestimmen ist noch der genaue Strom I_{T}, der von der Stromquelle 12 eingeprägt wurde, zu ermitteln. Dieser ergibt sich aus der Differenz der vom ersten ADC 3 und zweiten ADC 4 gemessenen Spannungen (Spannungsabfall über Referenzwiderstand 9) und der anschließenden Division durch den Wert des Referenzwiderstandes 9.

Einer der Modi ist schließlich ein PWM-Modus, in dem an den Eingang 2 der PWM-Sensor 34 anschließbar ist. In dieser Ausführungsvariante ist die Beschaltung des Eingangs 2 identisch zum Spannungsmodus. So sind der erste Schalter geschlossen, der zweite und dritte Schalter geöffnet. Allerdings sei angemerkt, dass auch der erste Schalter geöffnet sein kann, mithin der gesamte Spannungsteiler nicht benötigt wird, wenn das PWM-Signal den Spannungsbereich des ADC-Eingangs überschreitet. Zum Beispiel ist dies der Fall, wenn der Spannungsbereich des ADC zwischen 0V und 3,3V liegt und das PWM Signal 5V oder 10V Impulse enthält. Der erste ADC 3 ist über den Tiefpass 11 und dem Spannungsteiler 6 mit dem Eingang 2 verbunden. Das PWM Signal wird somit durch den Tiefpassfilter 11 in eine analoge Spannung umgewandelt, welche vom ersten ADC 3 ausgewertet wird. Die Spannung ist dann proportional zum Tastverhältnis des PWM Signals U_{PWM} am Eingang.

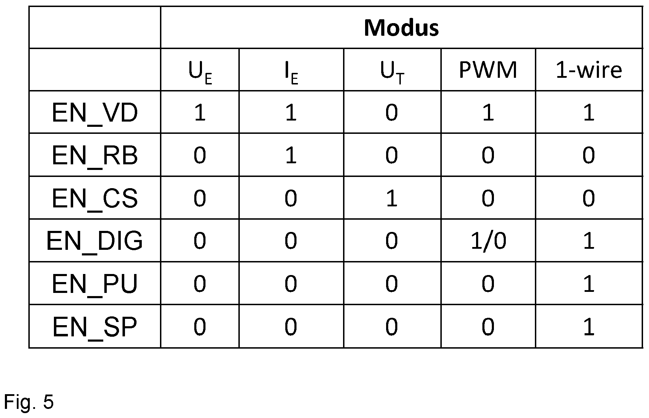

Die Schaltzustände der Steuersignale EN_VD, EN_RB und EN_ CS für die Schalter 7, 10, 13 sind in der Tabelle in Fig. 5 zusammengefasst.

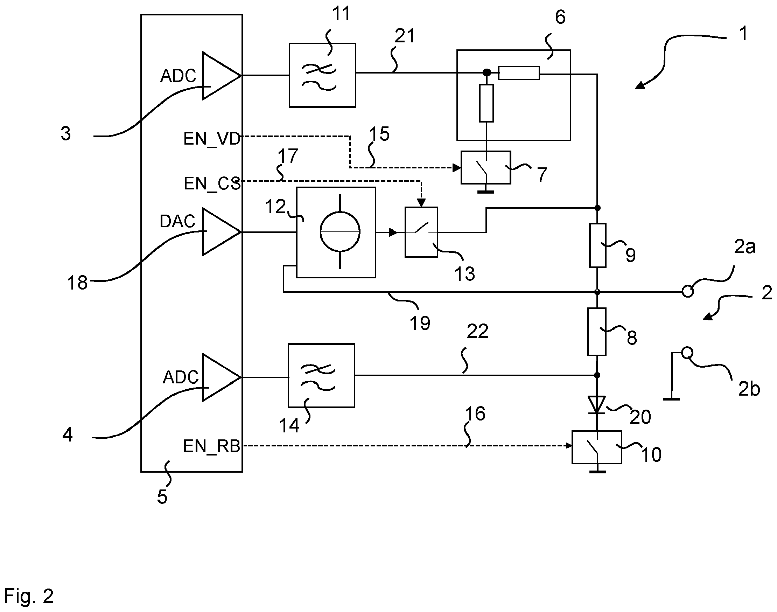

Fig. 2 zeigt eine zweite Ausführungsvariante einer erfindungsgemäßen Schaltungsanordnung 1. Diese unterscheidet sich von der Ausführungsvariante in Fig. 1 zunächst dadurch, dass die Stromquelle 12 nun eine geregelte, spannungsgesteuerte Stromquelle 12 ist. Um die Höhe des Stroms I_{T} vorzugeben, ist ein Steuereingang der Stromquelle 12 mit dem Ausgang eines Digital-Analog Wandlers (DAC) 18 verbunden, der ebenfalls Teil der Steuereinheit 5 ist. Zudem ist die Spannung am Eingang 2 über einen Rückkopplungspfad 19 auf einen Eingang der Stromquelle 12 rückgekoppelt. Der Strom I_{T} der Stromquelle 12 wird so geregelt, dass immer ein konstanter Strom durch den Temperatursensor 33 (Spannung erster ADC 3 - Spannung zweiter ADC 4 = const.). Dies sorgt dafür, dass der Spannungsabfall über den Zuleitungen zum Temperatursensor 33 bei dieser Zweileitermessung auch bei Temperaturänderungen immer konstant bleibt und somit später vom ermittelten Endwert wieder abgezogen werden kann. Die Genauigkeit der Temperaturmessung wird dadurch wesentlich erhöht.

Ein weiterer Unterschied zu der Ausführungsvariante in Fig. 1 liegt darin, dass dem zweiten Schalter 10 eine Diode 20 vorgeschaltet ist. Der zweite Schalter, vorzugsweise ein Transistor, z.B. ein MOSFET, wird durch die Diode D vor negativen Eingangsspannungen (in allen Messmodi) und damit wirksam vor Zerstörung geschützt.

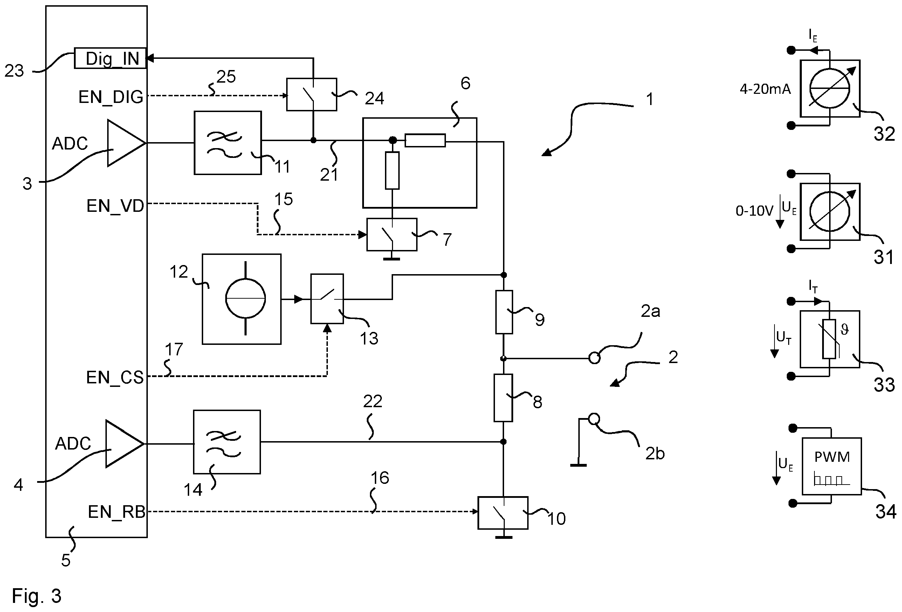

Fig. 3 zeigt eine dritte Ausführungsvariante einer erfindungsgemäßen Schaltungsanordnung 1. Diese unterscheidet sich von der ersten und zweiten Ausführungsvariante darin, dass die Steuereinheit 5 einen digitalen Eingang 23 aufweist, der über einen vierten Schalter 24 mit dem Primärmesspfad 21 und damit mit dem Eingang 2 verbindbar ist. Der vierte Schalter 24 wird ebenfalls von der Steuereinheit 5 durch ein Steuersignal EN_DIG angesteuert. Mit der Ausführungsvariante in Fig. 3 ist eine alternative Konfiguration der Beschaltung des multifunktionalen Eingangs 2 für den PWM-Betrieb möglich. In dieser Konfiguration sind der erste und der vierte Schalter 7, 24 eingeschaltet, der zweite und dritte Schalter 10, 13 sind ausgeschaltet. Der erste Schalter 7 muss aber nur dann eingeschaltet werden, wenn das PWM Signal den Spannungsbereich des Digitaleingangs überschreitet. Durch den vierten Schalter 24 wird das PWM-Signal am Eingang 2 an den digitalen Eingang 23 geleitet und kann dort unmittelbar ausgewertet werden.

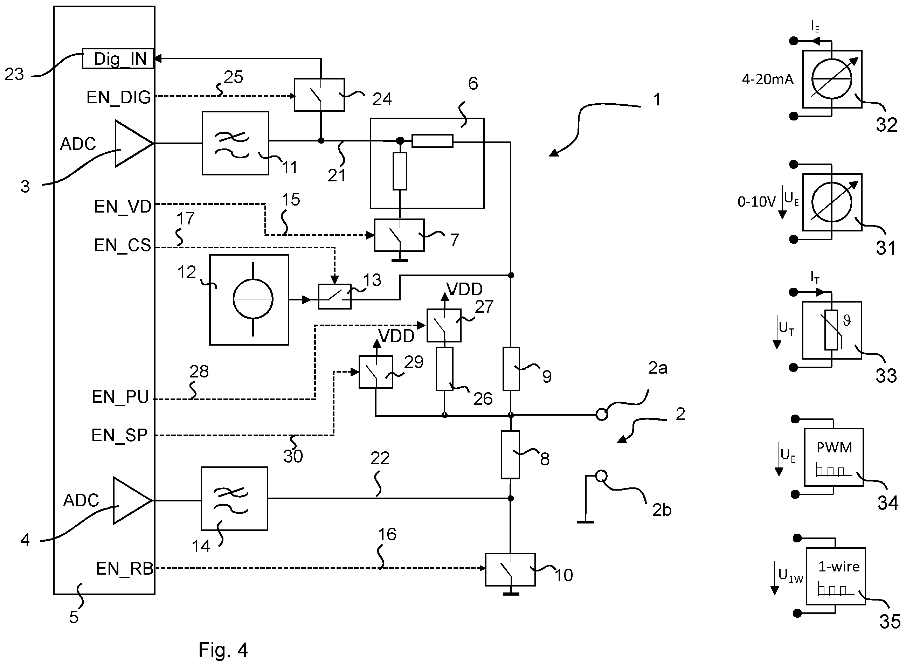

Fig. 4 zeigt eine vierte Ausführungsvariante einer erfindungsgemäßen Schaltungsanordnung 1, die eine Weiterbildung der dritten Ausführungsvariante. Diese vierte Variante kann in fünf verschiedenen Modi betrieben werden. Zusätzlich zu den vorher beschriebenen vier Modi ist einer der Modi ein Datenmodus, in dem an den Eingang 2 ein über eine gemeinsame Daten- und Versorgungsleitung speisbarer digitaler 1-wire Sensor 35 mit einem digitalen Ausgangssignal U_{1W} anschließbar ist. Ein solcher 1-wire Sensor 35 kann beispielsweise ein Temperatursensor wie der DS18S20 der Firma Maxim Integrated Products, Inc. Über einen fünften Schalter 27 ist eine Betriebsspannung VDD an den Eingang 2 legbar, um den 1-wire Sensor 35 zu speisen. Die Betriebsspannung VDD ist aber nicht direkt, sondern über einen Pull-up Widerstand 26 mit dem Eingang 2 verbunden. Über einen sechsten Schalter 29 ist der Pull-up Widerstand überbrückbar. Beide Schalter sind steuerbare Halbleiterschalter, die von der Steuereinheit 5 gesteuert werden, wobei das Steuersignal EN_PU den fünften Schalter 28 (Pull-up Widerstand) schaltet und das Steuersignal EN_SP den sechsten Schalter 29 schaltet.

Die Schaltzustände aller Steuersignale EN_VD, EN_RB und EN_ CS, EN_SP, EN_PU, EN_DIG, der Schalter 7, 10, 13 sind in der Tabelle in Fig. 5 zusammengefasst.

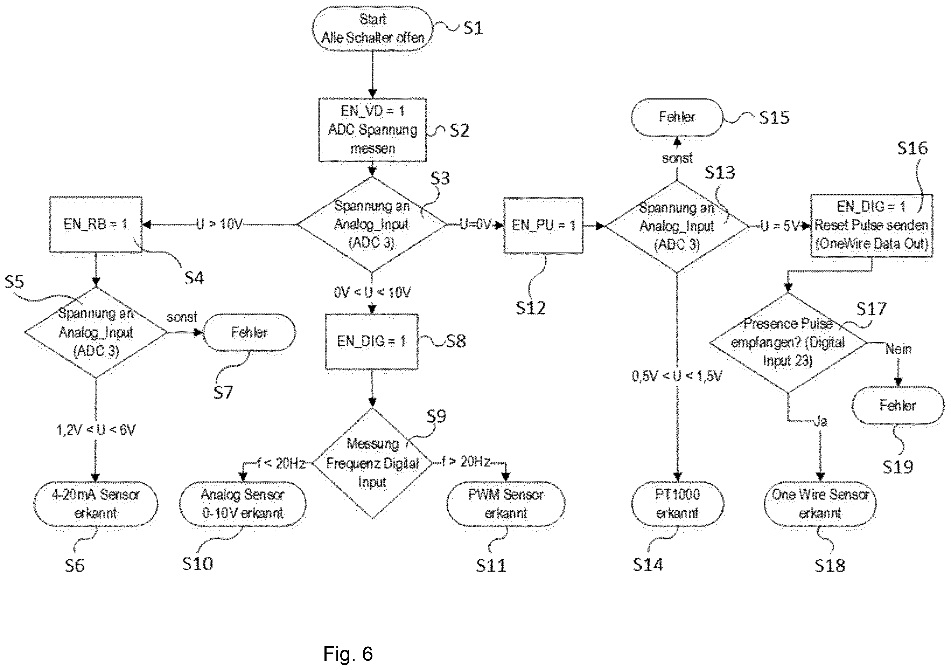

Fig. 6 zeigt ein Ablaufdiagramm des erfindungsgemäßen Verfahrens zur Feststellung, welcher Gerätetyp an den multifunktionalen Eingang 2 angeschlossen ist. Das Verfahren ist programmgesteuert und in der Steuereinheit 5 implementiert, so dass die Schaltungsanordnung 1 eingerichtet ist, selbständig zu erkennen, welcher Sensortyp bzw. Gerätetyp an ihren Eingang 2 angeschlossen ist. Idealerweise wird auch sogleich die für den erkannten Sensor bzw. das Gerät benötigte Konfiguration der Beschaltung eingestellt, oder lediglich übernommen, sofern bereits während der Durchführung des Verfahrens die Schalterzustände so eingestellt wurden, wie sie für die entsprechende Konfiguration benötigt wurden.

Das Verfahren kann zum Beispiel beim Hochfahren (Booten) des Steuergeräts, insbesondere der Steuereinrichtung, bzw. beim Einschalten des Steuergeräts aktiviert werden. Alternativ kann das Verfahren manuell im Steuergerät ausgelöst werden. Wiederum alternativ kann es automatisch ausgelöst werden, wenn ein bestimmtes Ereignis eintritt, beispielsweise am Steuergerät durch den Benutzer eine Regelungseinstellung vorgenommen wird, die einen bestimmten Sensor oder Sollwert am multifunktionalen Eingang benötigt.

Die Erkennung des Gerätetyps erfolgt durch aufeinanderfolgendes Schalten der Schalter zum Zu- und/ oder Abschalten der Komponenten der internen Beschaltung. Je weniger Gerätetypen berücksichtigt werden müssen, desto weniger Schritte sind erforderlich und desto kürzer ist die Schaltanzahl. Muss nur zwischen den Gerätetypen mit Spannungsausgang 31, Stromausgang 32 und Widerstandsthermometer 33 unterschieden werden, genügt im einfachsten Fall ein einziger Schaltvorgang, wie nachfolgend deutlich wird.

Das Verfahren beginnt in Schritt S1 damit, dass sichergestellt wird, dass alle Schalter 7, 10, 13, 24, 27, 29 ausgeschaltet sind. Es wird dann zunächst das Steuersignal EN_VD auf 1 gesetzt und der erste Schalter aktiviert, so dass der Spannungsteiler 6 aktiv wird, Schritt S2. Dies ist allerdings nur nötig, wenn Eingangsspannungen zugelassen werden, die den Eingangsspannungsbereich des verwendeten Analog-Digital Wandler 3 und/ oder des Digitaleingangs 23 überschreiten. Herstellerseitig kann jedoch die Auswahl möglicher Geräte, die an den multifunktionalen Eingang 2 angeschlossen werden können, auf solche Geräte/ Sensoren eingeschränkt sein, deren Ausgangssignal den Eingangsspannungsbereich des Analog-Digital Wandlers nicht überschreitet. Somit ist Schritt S2 im Grunde ein optionaler Schritt.

Von dem ersten Analog-Digital Wandler 3 wird dann die Spannung am Eingang 2 gemessen und in Abhängigkeit der gemessenen Spannung auf den Gerätetyp geschlossen, Schritt S3.

Je weniger Gerätetypen unterschieden werden müssen, desto weniger Fallunterscheidungen sind hier bei der Auswertung der gemessenen Spannung erforderlich. So kann beispielsweise zwischen einem Gerät 31 mit einem Spannungssignal, einem Gerät 32 mit einem Stromsignal und einem Widerstandsthermometer 33 durch einen einzigen Schritt unterschieden werden.

Entsprechend komplexer wird es, je mehr verschiedene Gerätetypen an den multifunktionalen Eingang 2 anschließbar sind. Soll zwischen einem Gerät 31 mit einem Spannungssignal und einem Gerät 34 mit PWM-Signal unterschieden werden, ist eine weitere Abfrage erforderlich. Gleiches gilt für den Fall, dass zwischen einem Widerstandsthermometer 33 und einem 1-wire Sensor 34 unterschieden werden soll. Das Verfahren kann zudem Schritte bzw. Fallunterscheidungen S5, S13, S17 umfassen, um Fehlermeldungen S7, S15 S19 auszugeben, wenn ein abnormaler Zustand am Eingang erkannt wurde, was auf einen fehlenden Sensor, einen fehlerhaften Sensor oder einen falschen Sensor hindeutet.

In Abhängigkeit von der vom ersten ADC 3 gemessenen Spannung wird ein Gerät 32 mit einem Stromsignal I_{E} als Ausgangssignal am Eingang 2 angenommen, wenn die Spannung am Eingang 2 größer als ein oberer Grenzwert ist. Als oberer Grenzwert kann beispielsweise der maximal zu erwartende Wert des Spannungssignals, beispielsweise 10V, verwendet werden.

Um einen möglichen Fehler auszuschließen, kann zusätzlich für den erkannten Fall "Gerät 32 mit Stromsignal I_{E}" eine Überprüfung dieser Annahme erfolgen, indem der Lastwiderstand 8 am Eingang 2 zu Masse verbunden wird, Schritt S4. Hierzu wird das Signal EN_RB auf 1 gesetzt und der zweite Schalter 24 aktiviert. Anschließend wird erneut die Spannung am Eingang 2 vom ersten ADC 3 gemessen, Schritt S5. Reduziert sich die Spannung am Eingang 2 erwartungsgemäß auf einen bestimmten Wertebereich, beispielsweise auf einen Bereich zwischen 1,2V und 6V, so ist die Annahme bestätigt und es wurde erfolgreich ein Gerät 32 mit einem Stromsignal, beispielsweise ein 0..20mA oder 4...20mA Sensor erkannt, Schritt S6. Anderenfalls wird auf einen Fehler geschlossen, Schritt S7, wenn dies nicht der Fall ist. Eine Fehlermeldung kann dann ausgegeben insbesondere angezeigt werden.

Es wird dabei zudem davon ausgegangen, dass der Sensor über eine Versorgungsspannung, z.B. 24V, gespeist wird.

In Abhängigkeit von der in Schritt S3 vom ersten ADC 3 gemessenen Spannung wird ein Gerät 31 mit einem Spannungssignal U_{E} oder ein PWM-Gerät 34 mit einem PWM-Signal U_{PWM} einer bestimmten Frequenz am Eingang 2 angenommen, wenn die Spannung am Eingang 2 zwischen null und dem oberen Grenzwert liegt.

Um dann weiter differenzieren zu können, ob der Gerätetyp das Gerät 31 mit dem Spannungssignal oder das PWM-Gerät 34 ist, wird der Eingang 2 anschließend mit dem Digitaleingang 23 verbunden, Schritt S8. Hierzu wird das Signal EN_DIG auf 1 gesetzt und der vierte Schalter 24 aktiviert. Anschließend wird die Frequenz des Ausgangssignals Uε oder U_{PWM} ermittelt und mit einer Grenzfrequenz verglichen, Schritt S9. Auf das Gerät 31 mit dem Spannungssignal wird dann geschlossen, Schritt S10, wenn die ermittelte Frequenz unterhalb der Grenzfrequenz liegt. Alternativ wird auf das PWM-Gerät 34 geschlossen, wenn die ermittelte Frequenz oberhalb der Grenzfrequenz liegt, Schritt S11. Die Grenzfrequenz liegt sinnvollerweise unterhalb der Frequenz des PWM-Signals, beispielsweise bei 20Hz.

Es wird dabei davon ausgegangen, dass das PWM-Signal eine Frequenz oberhalb der Grenzfrequenz hat, eine Amplitude besitzt, die maximal dem oberen Grenzwert (10V) bezogen auf Masse des Eingangs 2 entspricht.

In Abhängigkeit von der in Schritt S3 vom ersten ADC 3 gemessenen Spannung wird ein Widerstandsthermometer 33 oder ein 1-wire Sensor 35 am Eingang 2 angenommen, wenn keine Spannung am Eingang 2 vorliegt. Um dann weiter differenzieren zu können, ob das Gerät 33, 35 ein Widerstandsthermometer 33 oder ein 1-wire Sensor 35 ist, wird der Eingang 2 anschließend über den Pull-up Widerstand 26 mit der Versorgungsspannung VDD beaufschlagt, indem das Steuersignal EN_PU auf 1 gesetzt und der fünfte Schalter 27 geschlossen wird, Schritt S12. Die Versorgungsspannung beträgt beispielsweise 5V.

Es wird dann auf das Widerstandsthermometer 33 geschlossen, Schritt S14, wenn die Spannung am Eingang 2 in einem Werteberich unterhalb der Versorgungsspannung VDD liegt, beispielsweise zwischen 0,5V und 1,5V. Alternativ wird auf den 1-wire Sensor 35 geschlossen, wenn die Spannung am Eingang 2 nahezu gleich der Versorgungsspannung ist. Ist die Spannung am Eingang außerhalb des Wertebereichs und auch nicht nahezu gleich der Versorgungsspannung, so wird auf einen Fehler geschlossen, Schritt S15. Eine Fehlermeldung kann dann ausgegeben insbesondere angezeigt werden.

Zusätzlich kann eine Überprüfung der Annahme eines 1-wire Sensors 35 erfolgen, indem der Eingang 2 mit dem Digitaleingang 23 verbunden wird, Schritt S16. Hierzu wird das Signal EN_DIG auf 1 gesetzt und der vierte Schalter 24 aktiviert. Zusätzlich wird eine bestimmte Spannungspulsfolge, die einen Reset-Puls darstellt, am Eingang 2 erzeugt, die eine Anfrage an den Sensor 35 ist. Dieser Puls wird durch entsprechend gepulstes Einschalten des zweiten Schalters 10 realisiert. Die entspreche Pulsfolge wird dabei in dem Signal EN_RB abgebildet. Durch das Einschalten des zweiten Schalters 10 wird der Lastwiderstand mit Masse verbunden und der Eingang 2, an den die Datenleitung des 1-wire Sensors 35 angeschlossen ist, auf Masse gezogen, d.h. ein Active Low übermittelt.

Anschließend wird auf eine bestimmte Spannungspulsfolge (Präsenzpuls) als Antwort des 1-wire Sensors 35 gewartet. Wird die bestimmte Spannungspulsfolge als Antwort am Digitaleingang 23 empfangen, Schritt S17, ist bestätigt, dass ein 1-wire Sensor 35 am Eingang 2 angeschlossen ist, Schritt S18. Bleibt die Antwort aus, wird auf einen Fehler geschlossen, Schritt S19. Eine Fehlermeldung kann dann ausgegeben insbesondere angezeigt werden.

Mit dem vorgestellten Verfahren können fünf verschiedene Gerätetypen an dem multifunktionalen Eingang 2 automatisch und zuverlässig erkannt werden, so dass keine manuellen Einstellungen mehr erforderlich sind, um dem Steuergerät den angeschlossenen Typ mitzuteilen.

Die Schaltungsanordnung 1 nach einer der Ausführungsvarianten ist Teil einer Pumpenelektronik eines Pumpenaggregats, insbesondere eines Kreiselpumpenaggregats. Die Pumpenelektronik entspricht hier dem beschriebenen Steuergerät.

## Patentansprüche

1. Pumpenelektronik eines Pumpenaggregats der technischen Gebäudeausrüstung umfassend eine Schaltungsanordnung (1) zur Verarbeitung eines Ausgangssignals (U_{E}, I_{E}, U_{T}, U_{PWM}, U_{1W}) eines Geräts (31, 32, 33, 34, 35), mit einem multifunktionalen Eingang (2) umfassend zwei Anschlüsse (2a, 2b) zum Anschließen des Geräts (31, 32, 33, 34, 35), wobei die Schaltungsanordnung (1) in zumindest zwei verschiedenen Modi betreibbar ist, und an den Eingang (2) zumindest drei unterschiedliche Gerätetypen mit Ausgangssignalen verschiedener Arten anschließbar sind, und eine interne Beschaltung des Eingangs (2) mit zumindest einem steuerbaren Schalter (7, 10, 13, 24, 27) zur Änderung der internen Beschaltung in Abhängigkeit des angeschlossenen Gerätetyps aufweist, und wobei einer der Modi ein Modus ist, in dem an den Eingang (2) ein PT100 oder PT1000 als Widerstandsthermometer (33) anschließbar ist, und in dem eine mit einem Schalter (13) zuschaltbare Stromquelle (12) zur Speisung des Widerstandsthermometers (33) mit einem Messstrom und Erzeugung eines Spannungssignals (U_{T}) als Ausgangssignal mit dem Eingang (2) verbunden ist, und ein Analog-Digital Wandler (4) mit dem Eingang (2) verbunden ist, um die Spannung über dem Widerstandsthermometer (33) zu erfassen.

2. Pumpenelektronik nach Anspruch 1, **dadurch gekennzeichnet,**
- **dass** einer der Modi ein Modus ist, in dem an den Eingang (2) ein Gerät (31) mit einem Spannungssignal (U_{E}) als Ausgangssignal anschließbar ist, wobei ein Analog-Digital Wandler (3) mit dem Eingang (2, 2a) verbunden ist, um das Spannungssignal zu erfassen (U_{E}), und/ oder
- **dass** einer der Modi ein Modus ist, in dem an den Eingang (2) ein Gerät (32) mit einem Stromsignal (I_{E}) als Ausgangssignal anschließbar ist, und in dem ein mit einem Schalter (10) zuschaltbarer Lastwiderstand (8) den Eingang (2, 2a) zu Masse hin verbindet und ein Analog-Digital Wandler (3) mit dem Eingang (2) verbunden ist, um einen Spannungsabfall am Lastwiderstand (8) zu erfassen, und / oder
- **dass** einer der Modi ein Modus ist, in dem an den Eingang (2) ein Gerät (34) mit einem ein Tastverhältnis angebendes digitales Spannungssignal (U_{PWM}) konstanter Frequenz als Ausgangssignal anschließbar ist, und dass ein Analog-Digital Wandler (3) über einen Tiefpassfilter (11) mit dem Eingang (2) verbunden ist oder ein mit einem Schalter (24) zuschaltbarer Digitaleingang (23) mit dem Eingang (2) verbunden ist, und/ oder
- **dass** einer der Modi ein Modus ist, in dem an den Eingang (2) ein über eine gemeinsame Daten- und Versorgungsleitung speisbarer digitaler Sensor (35) mit einem digitalen Ausgangssignal (U1W) anschließbar ist, und in dem eine mit einem Schalter (27) zuschaltbare Betriebsspannung (VDD) für den digitalen Sensor (35) über einen überbrückbaren Pull-up Widerstand (26) mit dem Eingang (2) verbunden ist und ein mit einem Schalter (24) zuschaltbarer Digitaleingang (23) mit dem Eingang (2) verbunden ist.

3. Pumpenelektronik nach Anspruch 2, **dadurch gekennzeichnet, dass** sie konfigurierbar ist, wahlweise in einem der in Anspruch 2 genannten Modi betrieben zu werden, wobei sie vorzugsweise eine Steuereinheit (5) umfasst, um den oder die Schalter (7, 10, 13, 24, 27) in Abhängigkeit des Modus ein- oder auszuschalten.

4. Pumpenelektronik nach einem der Ansprüche 2 oder 3, **dadurch gekennzeichnet, dass** der Analog-Digital Wandler (3) mit dem Eingang (2, 2a) über einen mit einem Schalter (7) abschaltbaren Spannungsteiler (6) verbunden ist, wobei der Spannungsteiler in dem Modus mit angeschlossenem Widerstandsthermometer (33) abgeschaltet ist.

5. Pumpenelektronik nach einem der Ansprüche 2 bis 4, **dadurch gekennzeichnet, dass** ein Referenzwiderstand (9) zwischen der Stromquelle (12) und dem Eingang (2) liegt, wobei der Analog-Digital Wandler (4) zur Erfassung der Spannung über dem Widerstandsthermometer (33) ein zweiter Analog-Digital Wandler (4) ist und ein erster Analog-Digital Wandler (3) über den Referenzwiderstand (9) mit dem Eingang (2) verbunden ist.

6. Pumpenelektronik nach Anspruch 5, **dadurch gekennzeichnet, dass** der zweite Analog-Digital Wandler (4) mit einem Knoten zwischen dem Lastwiderstand (8) und dem Schalter (10) verbunden ist.

7. Pumpenelektronik zumindest nach Anspruch 2, **dadurch gekennzeichnet, dass** die Stromquelle (12) von einem Digital-Analog Wandler (18) spannungsgesteuert ist.

8. Pumpenelektronik zumindest nach Anspruch 2 oder 7, **dadurch gekennzeichnet, dass** die Stromquelle (12) geregelt ist, wobei sie mit einem Rückkopplungseingang über einen Rückkopplungspfad (19) direkt mit dem Eingang (2) verbunden ist.

9. Pumpenelektronik zumindest nach Anspruch 3, **dadurch gekennzeichnet, dass** die Steuereinheit (5) den Analog-Digital Wandler (3), den ersten und zweiten Analog-Digital Wandler (3, 4) und/ oder den Digital-Analog Wandler (18) umfasst.

10. Pumpenelektronik nach einem der vorherigen Ansprüche, **dadurch gekennzeichnet, dass** sie eingerichtet ist, selbständig zu erkennen, welcher Gerätetyp an den Eingang (2) angeschlossen ist, wobei sie vorzugsweise eingerichtet ist, den angeschlossenen Gerätetyp anhand der am Eingang anliegenden Spannung und/ oder der Frequenz des Ausgangssignals (U_{E}, I_{E}, U_{T}, U_{PWM}, U_{1W}) und/ oder der Eingangsimpedanz des angeschlossenen Geräts (31, 32, 33, 34, 35) zu bestimmen, und/ oder den Gerätetyp durch aufeinanderfolgendes Schalten von zumindest einem Schalter (10, 13, 24, 27) zum Zu- und/ oder Abschalten von Komponenten der internen Beschaltung zu erkennen.

11. Verfahren zur automatischen Bestimmung des Typs eines an den multifunktionalen Eingang (2) einer Schaltungsanordnung (1) einer Pumpenelektronik nach zumindest einem der Ansprüche 1 bis 10 angeschlossenen Geräts (31, 32, 33, 34, 35), wobei die Spannung, die Frequenz und/ oder die Impedanz am Eingang (2) ermittelt und in Abhängigkeit der ermittelten Spannung, Frequenz und/ oder Impedanz auf den Gerätetyp geschlossen wird, und ein PT100 oder PT1000 als Widerstandsthermometer (33) oder ein 1-wire Sensor (35) am Eingang (2) angenommen wird, wenn keine Spannung am Eingang (2) vorliegt.

12. Verfahren nach Anspruch 11, **dadurch gekennzeichnet, dass** nach der Erkennung des Gerätetyps die interne Beschaltung auf den Modus mit dem erkannten Gerätetyp konfiguriert wird.

13. Verfahren nach einem der Ansprüche 11 oder 12, **dadurch gekennzeichnet,**
- **dass** ein Gerät (32) mit einem Stromsignal (I_{E}) als Ausgangssignal am Eingang (2) angenommen wird, wenn die Spannung am Eingang (2) größer als ein oberer Grenzwert ist, und/ oder
- **dass** ein Gerät (31) mit einem Spannungssignal (U_{E}) als Ausgangssignal oder ein PWM-Gerät (34) mit einem ein Tastverhältnis angebenden digitalen Spannungssignal (U_{PWM}) konstanter Frequenz als Ausgangssignal am Eingang (2) angenommen wird, wenn die Spannung am Eingang (2) zwischen null und einem oberen Grenzwert liegt.

14. Verfahren nach Anspruch 13, **dadurch gekennzeichnet, dass** eine Überprüfung der Annahme "Gerät (32) mit einem Stromsignal (I_{E}) als Ausgangssignal" erfolgt, indem ein Lastwiderstand (8) am Eingang (2) zu Masse verbunden wird, wobei auf das Gerät (32) mit dem Stromsignal (I_{E}) geschlossen wird, wenn die Spannung am Eingang (2) innerhalb eines bestimmten Wertebereichs liegt, oder auf einen Fehler geschlossen wird, wenn dies nicht der Fall ist.

15. Verfahren nach Anspruch 13 oder 14, **dadurch gekennzeichnet, dass** im Falle der Annahme "Gerät (31) mit einem Spannungssignal (U_{E}) als Ausgangssignal oder PWM-Gerät (34) mit digitalem Spannungssignal (U_{PWM})" der Eingang (2) anschließend mit einem Digitaleingang (23) verbunden, die Frequenz des Ausgangssignals ermittelt und mit einer Grenzfrequenz verglichen wird, wobei auf das Gerät (31) mit dem Spannungssignal (U_{E}) als Ausgangssignal geschlossen wird, wenn die ermittelte Frequenz unterhalb der Grenzfrequenz liegt, oder auf das PWM-Gerät (34) geschlossen wird, wenn die ermittelte Frequenz oberhalb der Grenzfrequenz liegt.

16. Verfahren nach Anspruch 13, 14 oder 15, **dadurch gekennzeichnet, dass** im Falle der Annahme "Widerstandsthermometer (33) oder 1-wire Sensor (35)" der Eingang anschließend über einen Pull-up Widerstand (26) mit einer Versorgungsspannung (VDD) beaufschlagt wird, wobei auf das Widerstandsthermometer (33) geschlossen wird, wenn die Spannung am Eingang (2) in einem Werteberich unterhalb der Versorgungsspannung (VDD) liegt, oder auf den 1-wire Sensor (35) geschlossen wird, wenn die Spannung am Eingang (2) gleich der Versorgungsspannung ist, oder auf einen Fehler geschlossen wird, wenn die Spannung am Eingang (2) außerhalb des Wertebereichs liegt und nicht gleich der Versorgungsspannung ist.

17. Verfahren nach einem der Ansprüche 13 bis 16, **dadurch gekennzeichnet, dass** eine Überprüfung der Annahme eines 1-wire Sensors (35) erfolgt, indem der Eingang (2) mit einem Digitaleingang (23) verbunden, eine bestimmte Spannungspulsfolge am Eingang (2) als Anfrage erzeugt und auf eine bestimmte Spannungspulsfolge als Antwort des 1-wire Sensors (35) gewartet wird, wobei auf den 1-wire Sensor (35) geschlossen wird, wenn die bestimmte Spannungspulsfolge als Antwort empfangen wird, oder auf einen Fehler geschlossen wird, wenn dies nicht der Fall ist.

18. Verfahren nach Anspruch 17, **dadurch gekennzeichnet, dass** die die Anfrage bildende Spannungspulsfolge am Eingang (2) durch gepulstes Verbinden des Eingangs (2) mit Masse, insbesondere des Lastwiderstands (8) mit Masse, erzeugt wird.

## Claims

1. Pump electronics of a pump assembly as part of technical building equipment, comprising a circuit configuration (1) for processing an output signal (U_{E}, I_{E}, U_{T}, U_{PWM}, U_{IW}) of a device (31, 32, 33, 34, 35), with a multifunctional input (2) comprising two connections (2a, 2b) for the connection of the device (31, 32, 33, 34, 35), in which the circuit configuration (1) can be operated in at least two different modes and at least three different device types with different kinds of output signals can be connected to the input (2), and having an internal circuit of the input (2) with at least one controllable switch (7, 10, 13, 24, 27) to change the internal circuit depending on the connected device type, in which one of the modes is a mode where a PT100 or PT1000 as a resistance thermometer (33) can be connected to the input (2), and where a current source (12) that can be activated with a switch (13) is connected to the input (2) to supply the resistance thermometer (33) with a measuring current and to generate a voltage signal (U_{T}) as the output signal, and in which an analogue-digital converter (4) is connected to the input (2) to record the voltage across the resistance thermometer (33).

2. Pump electronics according to claim 1, **characterised**
- **by** one of the modes being a mode in which a device (31) with a voltage signal (U_{E}) as the output signal can be connected to the input (2), in which an analogue-digital converter (3) is connected to the input (2, 2a) to record the voltage signal (U_{E}), and/or
- **by** one of the modes being a mode in which a device (32) with a current signal as the output signal (I_{E}) can be connected to the input (2), and where a load resistor (8) that can be activated with a switch (10) connects the input (2, 2a) to earth and an analogue-digital converter (3) is connected to the input (2) to record a voltage drop on the load resistor (8), and/or
- **by** one of the modes being a mode in which a device (34) with a digital voltage signal (U_{PWM}) of constant frequency specifying a duty factor as the output signal can be connected to the input (2), and an analogue-digital converter (3) is connected to the input (2) via a low-pass filter (11) or a digital input (23) that can be activated with a switch (24) is connected to the input (2), and/or
- **by** one of the modes being a mode in which a digital sensor (35) that can be supplied via a shared data and connecting line, with a digital output signal (U1W), can be connected to the input (2), and where an operating voltage (VDD) that can be activated with a switch (27) for the digital sensor (35) is connected to the input (2) via a bridgeable pull-up resistor (26) and a digital input (23) that can be activated with a switch (24) is connected to the input (2).

3. Pump electronics according to claim 2, **characterised by** being configurable to be operated selectively in one of the modes described in claim 2, in which it preferably comprises a control unit (5) to turn the switch(es) (7, 10, 13, 24, 27) on or off according to the mode.

4. Pump electronics according to one of the claims 2 or 3, **characterised by** the analogue-digital converter (3) being connected to the input (2, 2a) via a voltage divider (6) that can be shut off with a switch (7), in which the voltage divider is shut off in the mode with the connected resistance thermometer (33).

5. Pump electronics according to one of the claims 2 through 4, **characterised by** a reference resistor (9) lying between the current source (12) and the input (2), in which the analogue-digital converter (4) to record the voltage across the resistance thermometer (33) is a second analogue-digital converter (4) and a first analogue-digital converter (3) is connected to the input (2) via the reference resistor (9).

6. Pump electronics according to claim 5, **characterised by** the second analogue-digital converter (4) being connected with a node between the load resistor (8) and the switch (10).

7. Pump electronics according to claim 2, **characterised by** the current source (12) being voltage controlled by a digital-analogue converter (18).

8. Pump electronics at least according to claim 2 or 7, **characterised by** the current source (12) being controlled, in which it is connected directly to the input (2) with a feedback input via a feedback path (19).

9. Pump electronics at least according to claim 3, **characterised by** the control unit (5) comprising the analogue-digital converter (3), the first and second analogue-digital converter (3, 4) and/or the digital-analogue converter (18).

10. Pump electronics according to one of the preceding claims, **characterised by** being configured to independently identify which device type is connected to the input (2), in which it is preferably configured to determine the connected device type according to the voltage applied to the input and/or the frequency of the output signal (U_{E}, I_{E}, U_{T}, U_{PWM}, U_{1W}) and/or the input impedance of the connected device (31, 32, 33, 34, 35), and/or to identify the device type by sequentially switching at least one switch (10, 13, 24, 27) to activate and/or deactivate components of the internal circuit.

11. Method for automatically identifying a device (31, 32, 33, 34, 35) connected to the multifunctional input (2) of a circuit configuration (1) of pump electronics, at least according to one of the claims 1 through 10, in which the voltage, the frequency and/or the impedance on the input (2) is determined and the device type is identified depending on the determined voltage, frequency and/or impedance, and a PT100 or PT1000 as a resistance thermometer (33) or a 1-wire sensor (35) is identified as being connected to the input (2) when there is no voltage on the input (2).

12. Method according to claim 11, **characterised by** the internal circuit being configured to the mode for the identified device type after identification of the device type.

13. Method according to one of the claims 11 or 12, **characterised**
- **by** a device (32) with a current signal (I_{E}) as the output signal being identified on the input (2) when the voltage on the input (2) is greater than an upper limit value, and/or
- **by** a device (31) with a voltage signal (U_{E}) as the output signal or a PWM device (34) with a digital voltage signal (U_{PWM}) of constant frequency specifying a duty factor as the output being identified on the input (2) when the voltage on the input (2) is between zero and an upper limit value.

14. Method according to claim 13, **characterised by** the identification "device (32) with a current signal (I_{E}) as the output signal" being verified by connecting a load resistor (8) on the input (2) to earth, in which the device (32) with the current signal (I_{E}) is identified when the voltage on the input (2) lies within a certain range of values or an error is identified when this is not the case.

15. Method according to claim 13 or 14, **characterised by** the input (2) subsequently being connected to a digital input (23) and the frequency of the output signal being determined and compared to a limit frequency in case of the identification "device (31) with a voltage signal (U_{E}) as the output signal or PWM device (34) with a digital voltage signal (U_{PWM})", in which the device (31) with the voltage signal (U_{E}) as the output signal is identified when the determined frequency is below the limit frequency, or the PWM device (34) is identified when the determined frequency is above the limit frequency.

16. Method according to claim 13, 14 or 15, **characterised by** a supply voltage (VDD) subsequently being applied to the input via a pull-up resistor (26) in case of the identification "resistance thermometer (33) or 1 -wire sensor (35)", in which the resistance thermometer (33) is identified when the voltage on the input (2) is within a range of values below the supply voltage (VDD), or the 1-wire sensor (35) is identified when the voltage on the input (2) is equal to the supply voltage or an error is identified when the voltage on the input (2) is outside the value range and not equal to the supply voltage.

17. Method according to one of the claims 13 through 16, **characterised by** the identification of a 1-wire sensor (35) being verified by connecting the input (2) to a digital input (23), generating a certain voltage pulse sequence on the input (2) as a query and waiting for a certain voltage pulse sequence as the reply of the 1-wire sensor (35), in which the 1-wire sensor (35) is identified when the certain voltage pulse sequence is received as the reply or an error is identified when this is not the case.

18. Method according to claim 17, **characterised by** the voltage pulse sequence forming the query being generated on the input (2) by the pulsed connection of the input (2) to earth, notably the connection of the load resistor (8) to earth.

## Revendications

1. Circuit électronique de pompe d'une unité de pompage de l'équipement technique du bâtiment comprenant un arrangement de circuit (1) pour le traitement d'un signal de sortie (U_{E}, I_{E}, U_{T}, U_{PWM}, U_{1W}) d'un appareil (31, 32, 33, 34, 35), avec une entrée multifonctionnelle (2) comprenant deux raccordements (2a, 2b) pour le raccordement de l'appareil (31, 32, 33, 34, 35), sachant que l'arrangement de circuit (1) peut fonctionner selon au moins deux modes différents, et qu'au moins trois types d'appareils différents peuvent être raccordés à l'entrée (2) avec des signaux de sortie de différents types, et un circuit interne de l'entrée (2) avec au moins un commutateur commandable (7, 10, 13, 24, 27) pour modifier le circuit interne en fonction du type d'appareil raccordé, et sachant que l'un des modes est un mode dans lequel un thermomètre PT100 ou PT1000 peut être raccordé à l'entrée (2) en tant que thermomètre à résistance (33), et dans lequel une source de courant (12) connectable par un commutateur (13) est reliée à l'entrée (2) pour alimenter le thermomètre à résistance (33) avec un courant de mesure et générer un signal de tension (U_{T}) comme signal de sortie, et un convertisseur analogique-numérique (4) est relié à l'entrée (2) pour détecter la tension aux bornes du thermomètre à résistance (33).

2. Circuit électronique de pompe selon la revendication 1, **caractérisé en ce que**
- l'un des modes est un mode dans lequel un appareil (31) avec un signal de tension (Uε) peut être raccordé à l'entrée (2) comme signal de sortie, sachant qu'un convertisseur analogique-numérique (3) est relié à l'entrée (2, 2a) pour détecter le signal de tension (UE), et/ou
- l'un des modes est un mode dans lequel un appareil (32) avec un signal de courant (I_{E}) peut être raccordé à l'entrée (2) en tant que signal de sortie, et dans lequel une résistance de charge (8) pouvant être connectée à l'aide d'un commutateur (10) relie l'entrée (2, 2a) à la masse et un convertisseur analogique-numérique (3) est relié à l'entrée (2) afin de détecter une chute de tension aux bornes de la résistance de charge (8), et/ou
- l'un des modes est un mode dans lequel un appareil (34) avec un signal de tension numérique (U_{PWM}) de fréquence constante présentant un rapport cyclique peut être raccordé à l'entrée (2) en tant que signal de sortie, et **en ce qu'**un convertisseur analogique-numérique (3) est relié à l'entrée (2) par l'intermédiaire d'un filtre passe-bas (11) ou qu'une entrée numérique (23) pouvant être activée par un commutateur (24) est reliée à l'entrée (2), et/ou
- que l'un des modes est un mode dans lequel un capteur numérique (35) pouvant être alimenté par l'intermédiaire d'une ligne de données et d'alimentation commune peut être raccordé à l'entrée (2) avec un signal de sortie numérique (U1W), et dans lequel une tension de service (VDD) pouvant être connectée au moyen d'un commutateur (27) pour le capteur numérique (35) est reliée à l'entrée (2) par l'intermédiaire d'une résistance pull-up (26) pouvant être pontée, et une entrée numérique (23) pouvant être connectée au moyen d'un commutateur (24) est reliée à l'entrée (2).

3. Circuit électronique de pompe selon la revendication 2, **caractérisé en ce qu'**il est configurable pour fonctionner sélectivement dans l'un des modes mentionnés dans la revendication 2, sachant qu'il comprend de préférence une unité de commande (5) pour activer ou désactiver le ou les interrupteurs (7, 10, 13, 24, 27) en fonction du mode.

4. Circuit électronique de pompe selon l'une des revendications 2 ou 3, **caractérisé en ce que** le convertisseur analogique-numérique (3) est relié à l'entrée (2, 2a) par l'intermédiaire d'un diviseur de tension (6) pouvant être mis hors circuit par un commutateur (7), sachant que le diviseur de tension est mis hors circuit dans le mode avec thermomètre à résistance (33) raccordée.

5. Circuit électronique de pompe selon les revendications 2 à 4, **caractérisé en ce qu'**une résistance de référence (9) est située entre la source de courant (12) et l'entrée (2), sachant que le convertisseur analogique-numérique (4) destiné à détecter la tension aux bornes du thermomètre à résistance (33) est un deuxième convertisseur analogique-numérique (4) et un premier convertisseur analogique-numérique (3) est relié à l'entrée (2) par l'intermédiaire de la résistance de référence (9).

6. Circuit électronique de pompe selon la revendication 5, **caractérisé en ce que** le deuxième convertisseur analogique-numérique (4) est relié à un noeud entre la résistance de charge (8) et le commutateur (10).

7. Circuit électronique de pompe selon au moins la revendication 2, **caractérisé en ce que** la source de courant (12) est commandée en tension par un convertisseur numérique-analogique (18).

8. Circuit électronique de pompe selon au moins la revendication 2 ou 7, **caractérisé en ce que** la source de courant (12) est régulée, sachant qu'elle est reliée directement à l'entrée (2) avec une entrée de rétroaction via un chemin de rétroaction (19).

9. Circuit électronique de pompe au moins selon la revendication 3, **caractérisé en ce que** l'unité de commande (5) comprend le convertisseur analogique-numérique (3), le premier et le deuxième convertisseurs analogique-numérique (3, 4) et/ou le convertisseur numérique-analogique (18).

10. Circuit électronique de pompe selon l'une des revendications précédentes, **caractérisé en ce qu'**il est agencé pour reconnaître de manière autonome quel type d'appareil est raccordé à l'entrée (2), sachant qu'il est de préférence agencé pour déterminer le type d'appareil raccordé à partir de la tension appliquée à l'entrée et/ou de la fréquence du signal de sortie (U_{E}, I_{E}, U_{T}, U_{PWM}, U_{1W}) et/ou de l'impédance d'entrée de l'appareil raccordé (31, 32, 33, 34, 35), et/ou de reconnaître le type d'appareil par la commutation successive d'au moins un commutateur (10, 13, 24, 27) pour la mise en circuit et/ou hors circuit de composants du circuit interne.

11. Procédé de détermination automatique du type d'un appareil (31, 32, 33, 34, 35) raccordé à l'entrée multifonctionnelle (2) d'un arrangement de circuit (1) d'un circuit électronique de pompe selon au moins l'une des revendications 1 à 10, sachant que la tension, la fréquence et/ou l'impédance à l'entrée (2) est déterminée et que le type d'appareil est déduit en fonction de la tension, de la fréquence et/ou de l'impédance déterminée, et un PT100 ou PT1000 est supposé être un thermomètre à résistance (33) ou un capteur 1 fil (35) à l'entrée (2) lorsqu'aucune tension n'est présente à l'entrée (2).

12. Procédé selon la revendication 11, **caractérisé en ce qu'**après la reconnaissance du type d'appareil, le câblage interne est configuré sur le mode avec le type d'appareil reconnu.

13. Procédé selon la revendication 11 ou 12, **caractérisé en ce que**
- un appareil (32) avec un signal de courant (I_{E}) est pris comme signal de sortie à l'entrée (2) lorsque la tension à l'entrée (2) est supérieure à une valeur limite supérieure, et/ou
- qu'un appareil (31) avec un signal de tension (Uε) comme signal de sortie ou un appareil PWM (34) avec un signal de tension numérique (U_{PWM}) de fréquence constante indiquant un rapport cyclique est supposé être le signal de sortie à l'entrée (2) lorsque la tension à l'entrée (2) est comprise entre zéro et une valeur limite supérieure.

14. Procédé selon la revendication 13, **caractérisé en ce qu"**une vérification de l'hypothèse « Appareil (32) avec un signal de courant (I_{E}) comme signal de sortie » est effectuée en reliant une résistance de charge (8) à l'entrée (2) à la masse, sachant qu'il est conclu sur l'appareil (32) avec le signal de courant (I_{E}) si la tension à l'entrée (2) se trouve à l'intérieur d'une plage de valeurs déterminée, ou en concluant sinon à un défaut.

15. Procédé selon la revendication 13 ou 14, **caractérisé en ce que,** dans le cas de l'hypothèse « Appareil (31) avec un signal de tension (U_{E}) comme signal de sortie ou appareil PWM (34) avec signal de tension numérique (U_{PWM}) », l'entrée (2) est ensuite reliée à une entrée numérique (23), la fréquence du signal de sortie est déterminée et comparée à une fréquence limite, sachant qu'il est déterminé sur l'appareil (31) avec le signal de tension (U_{E}) comme signal de sortie si la fréquence déterminée est inférieure à la fréquence limite, ou sur l'appareil PWM (34) si la fréquence déterminée est supérieure à la fréquence limite.

16. Procédé selon la revendication 13, 14 ou 15, **caractérisé en ce que,** dans le cas de l'hypothèse « Thermomètre à résistance (33) ou capteur 1 fil (35) », l'entrée est ensuite alimentée en tension d'alimentation (VDD) par l'intermédiaire d'une résistance pull-up (26), sachant qu'il est déterminé sur la sonde à résistance (33), si la tension à l'entrée (2) se situe dans une plage de valeurs inférieure à la tension d'alimentation (VDD), ou sur le capteur 1 fil (35) si la tension à l'entrée (2) est égale à la tension d'alimentation, ou sur un défaut si la tension à l'entrée (2) se situe en dehors de la plage de valeurs et n'est pas égale à la tension d'alimentation.

17. Procédé selon l'une des revendications 13 à 16, **caractérisé en ce qu'**une vérification de l'acceptation d'un capteur 1 fil (35) est effectuée en reliant l'entrée (2) à une entrée numérique (23), en générant une certaine séquence d'impulsions de tension à l'entrée (2) en tant que demande et en attendant une certaine séquence d'impulsions de tension en tant que réponse du capteur 1 fil (35), sachant qu'il est déterminé sur le capteur 1 fil (35) si la certaine séquence d'impulsions de tension est reçu en tant que réponse ou qu'il est conclu à une erreur si ce n'est pas le cas.

18. Procédé selon la revendication 17, **caractérisé en ce que** la séquence d'impulsions de tension formant la demande est générée à l'entrée (2) en reliant de manière pulsée l'entrée (2) à la terre, en particulier la résistance de charge (8) à la terre.
